# EUROPEAN PATENT APPLICATION

(11) **EP 4 578 919 A1**
(43) Date of publication of application: **02.07.2025**
(21) Application number: 23857370.3
(22) Date of filing: 23.08.2023
(51) Int. Cl.: C09D 11/18, B43K 7/00, B43K 7/01, B43K 24/08

(54) **AQUEOUS INK COMPOSITION FOR WRITING INSTRUMENTS, AND WRITING INSTRUMENT HOUSING SAME**

(30) Priority: 24.08.2022 JP 2022133582; 24.08.2022 JP 2022133588
(71) Applicant: Kabushiki Kaisha Pilot Corporation (also trading as Pilot Corporation), Tokyo 104-8304 (JP)
(72) Inventor: YAMADA, Ryo, Tokyo 104-8304 (JP)
(74) Representative: Prinz & Partner mbB
(86) International application number: PCT/JP2023/030257
(87) International publication number: WO 2024/043262

(57) **Abstract**

A writing instrument aqueous ink composition including water, a colorant, and a sulfate-esterified cellulose fiber in which at least part of hydroxy groups of the cellulose fiber are sulfate-esterified.

## Description

### TECHNICAL FIELD

The present disclosure relates to a writing instrument aqueous ink composition and a writing instrument containing the same.

### BACKGROUND ART

Conventionally, ink (aqueous ink) using water as a main solvent has been known, and has widely been used because of its low odor and high safety. Usually, colorants such as pigments and resin particles have unstable dispersion stability in water, and if the colorant is not uniformly dispersed and kept in a stable state, aggregation and/or settling will occur, leading to a decrease in density of handwriting formed by a writing instrument containing the ink, deterioration of the ink discharging properties from the pen tip, and writing defects such as line skipping and faint parts, thus making it difficult to obtain sufficient performance as a water-based ink for use with writing instruments. Therefore, there is disclosed an ink composition in which the dispersion stability of a pigment or resin particles in an aqueous ink is improved using various dispersants and/or additives (see, for example, Patent Documents 1 to 3).

Patent Document 1 discloses an aqueous ink composition including water, a pigment, and an alkali salt of a carboxy group-containing compound as a dispersant.

Patent Document 2 discloses an aqueous ink including water, a pigment, xanthan gum, and a non-crosslinked polyacrylic acid having a specific molecular weight or a salt thereof.

Patent Document 3 discloses an aqueous ink composition including a pigment, an aqueous medium, and a copolymer of an N-vinylpyrrolidone derivative and an acrylic acid derivative or a methacrylic acid derivative as a dispersant.

When a pen is stored with its pen tip facing downward, ink droplets accumulate at the tip of the pen, causing so-called dripping. The dripping is tried to be suppressed by adjusting the ink viscosity at the time of standing to a higher level using a shear thinning agent, or using various additives (see, for example, Patent Documents 4 to 5).

### CONVENTIONAL ART DOCUMENT

### PATENT DOCUMENT

Patent Document 1: JP 2004-018675 A
Patent Document 2: JP 2004-059877 A
Patent Document 3: JP H09-059554 A
Patent Document 4: JP 2006-77074 A
Patent Document 5: JP 2013-103986 A

### DISCLOSURE OF THE INVENTION

### PROBLEMS TO BE SOLVED BY THE INVENTION

The aqueous ink (aqueous ink composition) as disclosed in Patent Documents 1 to 3 can stably disperse the colorant in the ink by using a dispersant or a resin. However, in the prior art, as disclosed in Patent Documents 1 to 3, it has been found that the dispersion stability of the colorant in the ink is still insufficient, and in particular, when the pigment has a large particle size and/or a large specific gravity, it is difficult to suppress aggregation and/or settling of the pigment over a long period of time, and thus a decrease in handwriting density and/or writing defects may occur.

When the viscosity of the ink at the time of standing is increased using the shear thinning agent, it is possible to suppress the dripping of the ink from the pen tip to some extent, but there is a risk of deterioration in dry-up performance and/or deterioration of writing performance such as easy generation of faint parts in handwriting with an increase in viscosity. To solve the above-mentioned problems, in Patent Document 4, a xanthan gum or succinoglycan is used as the shear thinning agent, and also polyvinylpyrrolidone is used in combination at a specific ratio. With the above-mentioned configuration, it is possible to effectively suppress dripping and dry-up of the pen tip during standing. However, when the paper fiber or the like is sandwiched between the ball and an edge portion during writing, the pen is displayed in ball-pressure condition, and an edge of the tip is scratched or deformed due to falling or the like to cause inadvertent widening of the ink flow path, dripping of the ink may occur and further deterioration leads to falling drops of the ink during storage at high temperature or high humidity. Further, when starting to write, the shear load caused by the ball rotation is low, faint parts are likely to occur, leading to heavy feeling while writing.

Meanwhile, Patent Document 5 discloses a technology in which, by adding crystalline cellulose and resin particles in combination, rather than adjusting the viscosity using a shear thinning agent or the like, the resin particles suppress settling of the crystalline cellulose in the ink over time and enhance an effect of preventing forward leakage (of ink), thereby achieving a high level of both the effect of preventing forward leakage and temporal stability without causing deterioration of the writing performance.

However, it has been found that, even if the technology of Patent Document 5 is used, sufficient effect cannot be obtained when stored at high temperature and high humidity against the above-mentioned inadvertent widening of the ink flow path, and dripping of the ink may occur. Further, it has also been found that, since the crystalline cellulose is a large particle of 10 µm or more, which obtained by using pulp as a raw material and extracting and purifying the cellulose crystalline region through hydrolysis, may occur at the pen tip due to centrifugal load during the production of the writing instrument and/or long-term time lapse in the same position, which may hinder ink flow during writing.

The present disclosure is intended to provide a writing instrument aqueous ink composition capable of solving at least one of the following problems 1 and 2, and a writing instrument containing the same.

Problem to be solved 1: The colorant is less likely to cause aggregation and/or settling over time, and satisfactory handwriting can be formed.

Problem to be solved 2: Satisfactory handwriting with no faint parts or the like can be formed without causing dripping when the writing instrument is stored for a long period of time with its pen tip facing downward.

### MEANS FOR SOLVING THE PROBLEMS

Aspect 1 of the present invention provides:
a writing instrument aqueous ink composition including water, a colorant, and a sulfate-esterified cellulose fiber in which at least part of hydroxy groups of the cellulose fiber are sulfate-esterified.

Aspect 2 of the present invention provides:
the writing instrument aqueous ink composition according to Aspect 1, wherein the sulfate-esterified cellulose fiber has a cellulose I type crystal structure, and at least part of hydrogen atoms of hydroxy groups of the cellulose fiber is substituted with a sulfo group represented by the following formula (1):

(-SO₃⁻)ᵣ·Z^{r+} (1)

where r is a natural number of 1 to 3, and Z^{r +} is at least one selected from the group consisting of a hydrogen ion, a cation of an alkali metal, an ammonium ion, an aliphatic ammonium ion and an aromatic ammonium ion when r = 1, and at least one selected from the group consisting of a cation of an alkaline earth metal or a cation of a polyvalent metal when r = 2 or 3.

Aspect 3 of the present invention provides:
the writing instrument aqueous ink composition according to Aspect 1 or 2, wherein the sulfate-esterified cellulose fiber has an average fiber width of 0.5 to 500 nm.

Aspect 4 of the present invention provides:
the writing instrument aqueous ink composition according to Aspect 3, wherein the sulfate-esterified cellulose fiber has an average fiber width of 30 nm or less.

Aspect 5 of the present invention provides:
The writing instrument aqueous ink composition according to any one of Aspects 1 to 4, wherein an introduction amount of sulfur of the sulfate-esterified cellulose fiber is more than 0.42 mmol/g.

Aspect 6 of the present invention provides:
the writing instrument aqueous ink composition according to any one of Aspects 1 to 5, wherein the polymerization degree of the sulfate-esterified cellulose fiber is 30 or more.

Aspect 7 of the present invention provides:
the writing instrument aqueous ink composition according to any one of Aspects 1 to 6, wherein the haze value of a dispersion in which the sulfate-esterified cellulose fiber is dispersed in a water-soluble solvent such that the solid content concentration is 0.5% by mass is 20% or less.

Aspect 8 of the present invention provides:
the writing instrument aqueous ink composition according to any one of Aspects 1 to 7, wherein the sulfate-esterified cellulose fiber is mixed in an amount of 0.01 to 3% by mass in the total amount of the ink composition.

Aspect 9 of the present invention provides:
the writing instrument aqueous ink composition according to any one of Aspects 1 to 8, further including a shear thinning agent.

Aspect 10 of the present invention provides:
the writing instrument aqueous ink composition according to Aspect 9, wherein the shear thinning agent is one or more selected from the group consisting of water-soluble polysaccharides, polymers containing an alkyl ester of methacrylic acid as a main component and having a molecular weight of 100,000 to 150,000, poly-N-vinyl carboxylic acid amide crosslinked products, benzylidene sorbitol and derivatives thereof, benzylidene xylitol and derivatives thereof, alkali thickened acrylic resins, crosslinkable acrylic acid polymers, inorganic fine particles, nonionic surfactants having an HLB value of 8 to 12, and metal salts or amine salts of dialkylsulfosuccinic acid.

Aspect 11 of the present invention provides:
the writing instrument aqueous ink composition according to Aspect 9 or 10, wherein the shear thinning agent is mixed in an amount of 0.05 to 1% by mass in the total amount of the ink composition.

Aspect 12 of the present invention provides:
the writing instrument aqueous ink composition according to any one of Aspects 1 to 11, wherein the colorant is dispersed in the water.

Aspect 13 of the present invention provides:
The writing instrument aqueous ink composition according to any one of Aspects 1 to 12, wherein the colorant includes one or more selected from the group consisting of pigments and resin particles.

Aspect 14 of the present invention provides:
the writing instrument aqueous ink composition according to any one of Aspects 1 to 13, wherein the colorant has an average particle size of 0.01 to 25 µm.

Aspect 15 of the present invention provides:
the writing instrument aqueous ink composition according to any one of Aspects 1 to 14, including a colorant having a specific gravity of more than 1.

Aspect 16 of the present invention provides:
the writing instrument containing the writing instrument aqueous ink composition according to any one of Aspects 1 to 15.

### EFFECTS OF THE INVENTION

According to the embodiments of the present invention, it is possible to provide a writing instrument aqueous ink composition in which the colorant is less likely to cause aggregation and/or settling over time and satisfactory handwriting can be formed, and/or satisfactory handwriting with no faint parts or the like can be formed without causing dripping when the writing instrument is stored for a long period of time with its pen tip facing downward, and to provide a writing instrument containing the same.

### MODE FOR CARRYING OUT THE INVENTION

A writing instrument aqueous ink composition according to the embodiments of the present invention (hereinafter sometimes referred to as "ink composition" or "ink") comprises water, a colorant and a sulfate-esterified cellulose fiber. Hereinafter, each component constituting the ink composition according to the embodiments of the present invention will be described.

The ink composition according to the embodiments of the present invention contains water.

Examples of water include, but are not particularly limited to, tap water, ion-exchanged water, ultrafiltered water, distilled water and the like.

The content of water relative to the total mass of the ink composition is not particularly limited, but is preferably within a range of 35 to 95% by mass, and more preferably 40 to 90% by mass.

The ink composition according to the embodiments of the present invention contains a colorant.

It is possible to use, as the colorant, all dyes, pigments and resin particles that can be dissolved or dispersible in an aqueous medium. That is, the colorant may include any one or more selected from the group consisting of dyes, pigments and resin particles. For example, the colorant may include any one or more selected from the group consisting of pigments and resin particles, and may be any one or more selected from the group consisting of pigments and resin particles. The colorant may include dyes and may be made of dyes.

It is possible to use, as the dye, acidic dyes, basic dyes, direct dyes and the like.

It is possible to use, as the acidic dye, Naphthol Green B (C.I. 10020), Naphthol Yellow S (C.I. 10316), Acid Yellow 9 (C.I. 13015), Methanyl Yellow (C.I. 13065), Orange I (C.I. 14600), Ponceau SX (C.I. 14700), Orange II (C.I. 15510), Sunset Yellow FCF (C.I. 15985), New Coccine (C.I. 16255), First Acid Magenta (C.I. 17200), Acid First Red 3G (C.I. 18050), First Light Yellow 3G (C.I. 18820), Tartrazine (C.I. 19140), Resorcine Brown (C.I. 20170), Acid Blue 29 (C.I. 20460), Naphthol Blue Black (C.I. 20470), Acid Orange 56 (C.I. 22895), Acid Yellow 42 (C.I. 22910), Guinea Green B (C.I. 42085), Fast Green FCF (C.I. 42053), Brilliant Blue FCF (C.I. 42090), Acid Violet 6B (C.I. 42090), Acid Blue 1 (C.I. 42045), Brilliant Blue G (C.I. 42655), Brilliant Blue P-1 (C.I. 42735), Water Blue (C.I. 42755), Erio Green B (C I.44025), Acid Red (C.I. 45100), Violamine R (C.I. 45190), Uranine (C.I. 45350), Eosin (C.I. 45380), Phloxine B (C.I. 45410), Erythrosine (C.I. 45430), Nigrosine (C.I. 50420), Pyranine Conc. (C.I. 59040), Alizurol Purple (C.I. 60730), Alizarin Cyanine Green F (C.I. 61570), Indigo Carmine (C.I. 73015) and the like.

It is possible to use, as the basic dye, Chrysoidin (C.I. 11270), Methyl Violet FN (C.I. 42535), Crystal Violet (C.I. 42555), Malachite Green (C.I. 42000), Victoria Blue FB (C.I. 44045), Rhodamine B (C.I. 45170), Acridine Orange NS (C.I. 46005), Methylene Blue B (C.I. 52015) and the like.

It is possible to use, as the direct dye, Congo Red (C.I. 22120), Direct Sky Blue 5B (C.I. 24400), Violet BB (C.I. 27905), Direct Deep Black EX (C.I. 30235), Kayarus Black G Conc. (C.I. 35225), Direct Fast Black G (C.I. 35255), Phthalocyanine Blue (C.I. 74180) and the like.

Examples of the pigment include inorganic pigments, organic pigments, glitter pigments, fluorescent pigments, luminous pigments and the like. It is also possible to use water-dispersed pigments in which a pigment is finely and stably dispersed in an aqueous medium using a surfactant and/or a resin in advance.

A pigment dispersant may be used as necessary. Examples of the pigment dispersant include anionic and nonionic surfactants, anionic polymers such as polyacrylic acid and styrene-acrylic acid, and nonionic polymers such as PVP and PVA.

The pigment applied to the embodiments of the present invention also includes microcapsule pigments in which dyes such as acidic dyes, basic dyes, direct dyes, oil-soluble dyes and disperse dyes, or the above pigments are included in microcapsules. The dyes or pigments can be isolated and protected from the external environment by being included in the microcapsules, thus making it possible to improve the water resistance and the light resistance of the inclusion. The writing instrument aqueous ink composition containing the microcapsule pigment containing the dye is encompassed in the aspects of the "writing instrument aqueous ink composition containing a pigment" and also encompassed in the aspects of "writing instrument aqueous ink composition containing a dye".

The microcapsule pigment including a dye or pigment therein can be formed by encapsulating a colored body, which is obtained by dispersing or dissolving the dye or pigment in an oily medium, in microcapsules.

The pigment applied to the embodiments of the present invention also includes a microcapsule pigment in which a functional material, such as a thermochromic material that changes in color due to temperature change, and a photochromic material that changes in color due to light irradiation, is encapsulated in microcapsules. These color changes may be reversible or irreversible. Since color changes can be repeatedly exhibited due to a change in temperature or irradiation with light, a reversibly thermochromic material or a reversibly photochromic material is preferable.

Examples of the reversibly thermochromic material include a reversibly thermochromic composition composed of at least (A) an electron-donating color-developing organic compound, (B) an electron-accepting compound, and (C) a reaction medium that determines the occurrence temperature of the color-developing reaction of the components (A) and (B). By encapsulating the reversibly thermochromic composition in the microcapsule, a reversibly thermochromic microcapsule pigment can be formed.

As the reversibly thermochromic composition, a reversibly thermochromic composition of a heat-decoloring type having a characteristic of a relatively small hysteresis width (ΔH) (ΔH = 1 to 7°C) mentioned in JP S51-44706 B, JP S51-44707 B, JP H01-29398 B and the like may be used. The heat-decoloring type means that the color disappears when heated and the color is developed when cooled. The reversibly thermochromic composition changes its color before and after a predetermined temperature (color-changing point) as a boundary and exhibits a decolored state in a temperature range of equal to or more than a high-temperature-side color-changing point and a color-developing state in a temperature range of equal to or less than a low-temperature-side color-changing point, and this reversibly thermochromic composition is present in only one specific state of the states in the normal temperature range, while the other state is maintained while heat or cold required for the expression of the other state is applied, but when the application of heat or cold is eliminated, the composition returns to the state that is exhibited in the normal temperature range.

It is also possible to use, as the reversibly thermochromic composition, a reversibly thermochromic composition of a heat-decoloring type having a characteristic of a large hysteresis width (ΔH = 8 to 80°C) mentioned in JP H04-17154 B, JP H07-179777 A, JP H07-33997 A, JP H08-39936 A, JP 2005-1369 A and the like. The heat-decoloring type means that the color is decolored by heating and develops the color by cooling. This reversibly thermochromic composition changes the color following a greatly different path between when the temperature is raised from the lower temperature side than the discoloration temperature range and conversely when the temperature is lowered from the higher temperature side than the discoloration temperature range in the shape of a curve obtained by plotting a change in color development density due to a change in temperature changes. This reversibly thermochromic composition has color memory properties when the color-developing state in a temperature range of a complete color development temperature t₁ or lower or the decolored state in a high temperature range of a complete decoloring temperature t₄ or higher is in a specific temperature range [temperature range between a color-development start temperature t₂ and a decoloring start temperature t₃ (substantially two-phase holding temperature range)].

When a reversibly thermochromic composition having the above-mentioned color-memory property is applied to the embodiments of the present invention, as the reversibly thermochromic composition, specifically, the complete color development temperature t₁ is specified to a temperature that can be obtained only in a freezing room, a cold district, or the like, and the complete decoloring temperature t₄ is specified to a range of a temperature that can be obtained from a familiar heating body such as a frictional heat by a friction body, a hair dryer, or the like, and the reversibly thermochromic composition can effectively function for keeping a color exhibited in a normal state (daily life temperature range) by specifying the ΔH value to be 40 to 100°C.

The temperature that can be obtained only in a freezing room, a cold district is within a range of -50 to 0°C, preferably -40 to -5°C, and more preferably -30 to -10°C.

The temperature obtained from a familiar heating body such as a hair dryer is within a range of 50 to 95°C, preferably 50 to 90°C, and more preferably 60 to 80°C.

As the reversibly thermochromic composition, a reversibly thermochromic composition of a heat-color-developing type using a gallate ester mentioned in JP S51-44706 B, JP 2003-253149 A or the like may also be used. The heat-color-developing type means that the color develops when heated and the color disappears when cooled.

The reversibly thermochromic composition is a phase solution containing the above-mentioned components (A), (B), and (C) as essential components, and the ratio of each component depends on the concentration, color-changing temperature, color-changing form, and/or type of each component. In general, the component ratio at which desired characteristics are obtained is within a range of 0.1 to 100 for the component (B), preferably 0.1 to 50, more preferably 0.5 to 20, and 1 to 800 for the component (C), preferably 5 to 200, more preferably 5 to 100, and still more preferably 10 to 100, with respect to 1 of the component (A) (all of these proportions are parts by mass).

Examples of the reversibly photochromic material include photochromic compounds such as conventionally known spirooxazine derivatives, spiropyran derivatives, and naphthopyran derivatives which develop color when irradiated with sunlight, ultraviolet light, or blue light having a peak emission wavelength within a range of 400 to 495 nm and decolor when the irradiation is stopped, for example, compounds mentioned in JP 2021-120493 A and WO 2020/137469 A.

It is also possible to use a photochromic compound having a photo-memory property (color-memory photochromic property). Examples of such photochromic compound include diarylethene derivatives, for example, compounds mentioned in JP 2021-120493 A.

It is also possible to use, as the reversibly photochromic material, reversibly photochromic compositions in which the above photochromic compounds are dissolved in oligomers such as a styrene-based oligomer, an acryl-based oligomer, a terpene-based oligomer and a terpenephenol-based oligomer. A reversibly photochromic microcapsule pigment can be formed by encapsulating the reversibly photochromic composition in microcapsules.

By dissolving the photochromic compound in various oligomers, the light resistance and the color-development density can be improved, and the color-changing sensitivity can be adjusted.

The microencapsulation of the microcapsule pigment includes conventionally known isocyanate-based interfacial polymerization methods, in-situ polymerization methods such as melamine-formalin polymerization methods, in-liquid curing coating methods, phase separation methods from aqueous solutions, phase separation methods from organic solvents, melt dispersion cooling methods, in-air suspension coating methods, and spray drying methods. The method is appropriately selected according to the application. Examples of the material of the capsule include an epoxy resin, a urea resin, a urethane resin, and an isocyanate resin.

Further, a secondary resin film may be further provided on the surface of the microcapsule according to the purpose to impart durability, or the surface properties may be modified and put to practical use.

**In** the reversibly thermochromic microcapsule pigment or the reversibly photochromic microcapsule pigment, the mass ratio of the inclusion:the wall film is preferably 7:1 to 1:1, and when the mass ratio of the inclusion and the wall film is within the above range, it is possible to prevent a decrease in color density and sharpness at the time of color development. More preferably, the mass ratio of inclusion:the wall film is 6:1 to 1:1.

Mixing a non-color-changing colorant such as a general dye or pigment in the reversibly thermochromic microcapsule pigment or the reversibly photochromic microcapsule pigment allows the microcapsule pigment to exhibit a color-changing behavior from a color (1) to a color (2).

Examples of the resin particles include resin particles containing the dye, the pigment, the thermochromic material and/or the photochromic material mentioned above. The resin particles containing the dye are encompassed in the aspects of "writing instrument aqueous ink composition containing resin particles", and also encompassed in the aspects of "writing instrument aqueous ink composition containing a dye". The resin particles containing the pigment are encompassed in the aspects of the "writing instrument aqueous ink composition containing resin particles", and also encompassed in the aspects of the "writing instrument aqueous ink composition containing a pigment".

Examples of the resin particles containing a dye include colored resin particles in which dyes are homogeneously dissolved or dispersed in the resin particles, and colored resin particles in which dyes are dyed on the resin particles.

Examples of the resin particles containing the pigment include colored resin particles in which pigments are homogeneously dispersed in the resin particles, and colored resin particles in which the surface of the resin particles are coated with pigments. Here, the pigment may be surface-treated by various known methods for the purpose of improving the dispersibility and/or adsorptivity of the resin constituting the resin particles.

Examples of the resin particles containing a thermochromic material or a photochromic material include colored resin particles in which the reversibly thermochromic composition is homogeneously dispersed in the resin particles (hereinafter sometimes referred to as "reversibly thermochromic resin particles"), and colored resin particles in which the reversibly photochromic composition is homogeneously dispersed in the resin particles (hereinafter sometimes referred to as "reversibly photochromic resin particles").

The resin particles applied to the embodiments of the present invention also include solid resin particles having no void inside the particles, and hollow resin particles having voids inside the particles.

The resin particles may be produced by a pulverization method, a spray drying method, or a polymerization method in which the resin particles are polymerized in the presence of a dye, a pigment, a thermochromic material and/or a photochromic material in an aqueous or oily medium. Examples of the polymerization method include a suspension polymerization method, a suspension polycondensation method, a dispersion polymerization method, an emulsion polymerization method and the like.

The shape of the resin particles is not particularly limited, and resin particles having a spherical shape such as a perfect spherical shape, an elliptical spherical shape, or a substantially spherical shape, a polygonal shape, or a flat shape may be used. In particular, it is preferable to use spherical resin particles.

Colorants may be used alone, or two or more thereof may be used in combination.

The reversibly thermochromic composition or the reversibly photochromic composition is preferably encapsulated in microcapsules to form a microcapsule pigment. This is because a chemically and physically stable pigment can be formed by being encapsulated in microcapsules, and further, the reversibly thermochromic composition or the reversibly photochromic composition can be maintained at the same composition under various use conditions, and the same action and effect can be exhibited.

Although the mixing ratio of the colorant is not particularly limited, in order to prevent the colorant from aggregation and/or settling over time and to form satisfactory handwriting, the colorant is mixed preferably within a range of 1 to 25% by mass, more preferably 3 to 20% by mass, in the total amount of the ink composition. When the mixing ratio exceeds 25% by mass, the ink discharging properties of the writing instrument containing the ink composition is likely to degrade, and the writing defects such as faint parts and line skipping is likely to occur. Meanwhile, when the mixing ratio is less than 1% by mass, and the suitable handwriting density as the writing instrument is less likely to be obtained.

Meanwhile, in order to form satisfactory handwriting without causing dripping, faint parts and the like when stored for a long period of time with its pen tip facing downward, the colorant is preferably mixed within a range of 1 to 35% by mass, and more preferably 2 to 30% by mass, in the total amount of the ink composition.

When the colorant is a reversibly color-change microcapsule pigment or a reversibly photochromic microcapsule pigment, or reversibly thermochromic resin particles or reversibly photochromic resin particles, the colorant is mixed within a range of preferably 5 to 40% by mass, more preferably 10 to 40% by mass, and still more preferably 10 to 30% by mass, in the total amount of the ink. When the mixing ratio exceeds 40% by mass, the ink discharging properties of the writing instrument containing the ink composition degrades, and writing defects such as faint parts and line skipping are likely to occur. When the mixing ratio is less than 5% by mass, it is difficult to obtain suitable color-changing property and handwriting density as a writing instrument, and it is difficult to sufficiently satisfy the color-changing function.

Since the composition to which a colorant soluble in water of the above-mentioned colorants is applied is likely to cause dripping when stored at a high humidity, the configuration in the embodiments of the present invention can be effective. In the suppression of preventing dripping, the addition of the below-mentioned sulfate-esterified cellulose fiber in a dye-based aqueous ink composition is the most effective means in the dye-based aqueous ink composition.

The ink composition according to the embodiments of the present invention includes a sulfate-esterified cellulose fiber.

The sulfate-esterified cellulose fiber is that in which at least part of hydroxy groups in a glucose unit constituting the cellulose is subjected to sulfate esterification modification in various cellulose fibers.

The cellulose serving as the matrix may be any type, but those based on a cellulose having a cellulose I type crystal structure are widely applied.

Examples of the sulfate-esterified cellulose fiber include a sulfate-esterified cellulose fiber having a cellulose I type crystal structure in which at least part of hydrogen atoms of hydroxy groups of the cellulose fiber is substituted with a sulfo group represented by the following formula (1):

(-SO₃⁻)ᵣ·Z^{r+} (1)

where r is a natural number of 1 to 3, and Z^{r +} is at least one selected from the group consisting of a hydrogen ion, a cation of an alkali metal, an ammonium ion, an aliphatic ammonium ion and an aromatic ammonium ion when r = 1, and at least one selected from the group consisting of a cation of an alkaline earth metal or a cation of a polyvalent metal when r = 2 or 3.

In other words, the sulfate-esterified cellulose fiber substituted with a sulfo group represented by formula (1) can also be referred to as a sulfate-esterified cellulose fiber having a cellulose I type crystal structure in which at least part of hydroxy groups of the cellulose fiber is substituted with a sulfate ester group ((-O-SO₃ ⁻ )ᵣ ·Z^{r +} ).

Since the sulfate-esterified cellulose fiber has a sulfo group (also including a sulfo group which is (-SO₃ ⁻ ) and is included in a sulfate ester group (-O-SO₃ ⁻ )), the hydrophilicity is improved, thus making it possible to improve the dispersibility when dispersed in the ink composition. Further, the dispersed state can be easily maintained in the ink composition due to the electron repulsion of the introduced sulfo group, and thus a network structure can be formed by the interaction between the sulfate-esterified cellulose fibers. As a result, the sulfate-esterified cellulose fiber may prevent the colorants from contacting each other in the ink composition and suppress aggregation of the colorant, thus making it possible to stably hold the colorant in the ink composition. The sulfate-esterified cellulose fiber exerts the effect as a thickener or a gelling agent by the fiber length, leading to more stable holding of the colorant in the ink composition. That is, the sulfate-esterified cellulose fiber can exert the effect of improving the dispersion stability of the colorant (hereinafter referred to as "Effect 1").

Further, with the ink configuration according to the embodiments of the present invention, it is presumed that, by using the sulfate esterified cellulose fiber, when ink flow is stopped, the sulfate-esterified cellulose fiber in the vicinity of the tip (void) instantly holds the ink by the interaction between the cellulose fibers, and acts to return the original fluidity due to a slight load at the time of rewriting. Therefore, even in a harsh situation, such as when storing for a long period of time, when storing at a high temperature or a high humidity and when the flow path of the pen tip is unexpectedly expanded, thus exerting the effect of effectively suppressing dripping of the ink and falling drops of the ink. Since the dispersed state can be reformed with a slight load, the effect of enabling formation of satisfactory handwriting from the initial time can be exerted without causing handwriting faint parts at the time of rewriting (hereinafter, these effects are referred to as "Effect 2").

In the embodiments of the present invention, the sulfate-esterified cellulose fibers can exert at least one effect of "Effect 1" and "Effect 2" mentioned above.

Since the sulfate-esterified cellulose fiber has a sulfo group (also including a sulfo group which is (-SO₃ ⁻ ) and is included in a sulfate ester group (-O-SO₃ ⁻ )), the hydrophilicity can be improved, thus making it possible to improve the dispersibility when dispersed in the ink composition. Further, since the dispersed state can be easily maintained without causing aggregation in the ink due to the electron repulsion of the introduced sulfo group, the ink flow path can be sealed under conditions in which the ink dripping occurs while ensuring the ink stability due to centrifugal processing and/or lapse of time during production in a normal state.

Examples of the sulfate-esterified cellulose fiber in which at least part of hydrogen atoms of hydroxy groups of a cellulose having a cellulose I type crystal structure are substituted with a sulfo group (also including a sulfo group which is (-SO₃ ⁻ ) and is included in a sulfate ester group (-O-SO₃ ⁻ )) include a micro-order cellulose fiber which is not subjected to a fibrillating treatment (refining treatment), and a nano-order cellulose fiber subjected to a fibrillation treatment. In any case, the average fiber width of the sulfate-esterified cellulose fiber is preferably within a range of 0.5 to 500 nm.

Since the nano-order cellulose fiber subjected to a fibrillation treatment is a fine cellulose fiber subjected to a fibrillation treatment, it can be referred to as a sulfate-esterified fibrillated cellulose fiber or a sulfate-esterified fine cellulose fiber (sulfate-esterified cellulose nanofiber). The average fiber width of the sulfate-esterified cellulose fiber is preferably 0.5 nm or more, more preferably 1 nm or more, and still more preferably 2 nm or more, from the viewpoint of producing a fine sulfate-esterified cellulose fiber having a cellulose I type crystal structure.

From the viewpoint of removing other components (bordered pit, vessel element, etc.) of the pulp in the step of producing a sulfate-esterified cellulose fiber to obtain a pure sulfate-esterified cellulose fiber, the average fiber width is preferably 500 nm or less, and more preferably 100 nm or less.

**In** the ink composition according to the embodiments of the present invention, the hue of the sulfate-esterified cellulose fiber may affect the hue of the ink composition when the composition is such that the mixing amount of the sulfate-esterified cellulose fiber into the ink composition increases or is the composition using a light color colorant. Therefore, the average fiber width of the sulfate-esterified cellulose fiber is preferably adjusted to be 0.5 to 500 nm so as to obtain transparency when the sulfate-esterified cellulose fiber is dispersed in water, and more preferably 1 to 500 nm, 2 to 100 nm, 2 to 30 nm, 2 to 20 nm, and 2 to 10 nm in this order. When the average fiber width is within the above range, the hue of the sulfate-esterified cellulose fiber is less likely to affect the hue of the ink composition, and the ink composition easily exhibits the hue derived from the colorant.

Here, the ink composition using a reversibly thermochromic material or a reversibly photochromic material as the colorant is reversibly color-changed from a color development state to a decolored state depending on the presence or absence of temperature change or light irradiation, and it is difficult to visually recognize the color of the ink composition because the ink composition is colorless in the decolored state. However, when the hue of the sulfate-esterified cellulose fiber affects the hue of the ink composition, the residual color in the decolored state increases, and the color of the ink composition may be visually recognized even in the decolored state. Therefore, even when such a colorant is used, it is preferable that transparency is obtained when the sulfate-esterified cellulose fiber is dispersed in water, and the average fiber width of the sulfate-esterified cellulose fiber is preferably within the above range.

When the average fiber width of the fine cellulose fibers is less than 0.5 nm, cellulose is dissolved in water as molecules, thus making it difficult to exhibit physical properties (strength, rigidity, or dimensional stability) as the fine cellulose fiber. Meanwhile, when the average fiber width exceeds 500 nm, it cannot be said to be fine cellulose fiber and is merely a fiber included in normal pulp, and thus it is difficult to obtain physical properties (transparency, strength, rigidity, or dimensional stability) as the fine cellulose fiber, and the cellulose fiber is likely to settle in the ink composition.

When the sulfate-esterified fine cellulose fiber is applied to the ink composition, in addition to the above-mentioned transparency, the dispersibility in water is very high, the interaction between the fine cellulose fibers is easily generated, and thus the sulfate-esterified cellulose fiber easily forms a dense network structure, leading to more satisfactory dispersion stability of the colorant. When the sulfate-esterified fine cellulose fiber is applied to the ink composition, the dispersibility in the aqueous medium and the followability at the time of the ink flow are significantly enhanced, and thus the ink dripping suppression effect is more effectively exerted.

Conventionally, in order to improve the dispersion stability of the colorant, the ink is made to have a high viscosity using a thickener such as fine cellulose and/or xanthan gum. As a result, aggregation and/or settling of the colorant can be suppressed, but such high-viscosity ink is limited to a writing instrument that can be applied. However, as mentioned above, the ink composition using the sulfate-esterified fine cellulose fiber can easily form a dense network structure by the interaction between the fibers, and can stably hold the colorant over a long period of time while having a viscosity lower than that of the conventional ink composition using the thickener alone. Therefore, the sulfate-esterified fine cellulose fiber exerts a rheology control effect different from that of the conventional thickener, and exerts the effect of improving the dispersion stability of the colorant over time. Since the viscosity is lower than that of the ink composition using a conventional thickener alone, the ink discharging properties of the writing instrument containing the ink composition are improved and writing defects such as faint parts are suppressed, leading to a better feeling while writing and excellent color-development property of the handwriting.

When the above ink composition is used for a writing instrument equipped with a ballpoint pen tip (ballpoint pen), it is possible to suppress line splitting of the handwriting and improve the writing performance.

When the average fiber width of the sulfate-esterified fine cellulose fibers is more than 30 nm, the aspect ratio decreases and the interaction between the fibers tends to be less likely to occur. Further, when the average fiber width approaches 1/10 of the wavelength of visible light when the average fiber width is more than 30 nm, refraction and scattering of visible light easily occur on the interface when other additives are mixed in the ink composition, scattering of visible light occurs and the transparency tends to deteriorate. Therefore, the average fiber width of the sulfate-esterified fine cellulose fibers is preferably within a range of 2 to 30 nm, more preferably 2 to 20 nm, and still more preferably 2 to 10 nm, in view of the handleability and transparency.

In particular, in view of the transparency, the average fiber width of the sulfate-esterified fine cellulose fibers is preferably 20 nm or less, and more preferably 10 nm or less. If the average fiber width is adjusted to be 10 nm or less, scattering of visible light can be further reduced, and thus the sulfate-esterified fine cellulose fiber having high transparency can be obtained, and the inadvertent color change of the ink composition due to mixing of the sulfate-esterified fine cellulose fiber can be suppressed. From the viewpoint of suppressing dripping, higher effect is exerted when the average fiber width is 30 nm or less.

The average fiber width of the sulfate-esterified cellulose fiber can be measured as follows: the sulfate-esterified cellulose fiber is dispersed in a solvent such as pure water to prepare a mixed solution so as to have a predetermined concentration, followed by spin coating on a silica base material coated with polyethyleneimine (PEI) and further observation of the sulfate-esterified cellulose fiber on the silica base material.

As the observation method, a scanning probe microscope (e.g. product name: SPM-9700, manufactured by Shimadzu Corporation) can be used. The average fiber width of the sulfate-esterified cellulose fiber can be obtained by randomly selecting 20 sulfate-esterified cellulose fibers in the obtained observation images, measuring the fiber width of each fiber, and averaging the resulting fiber widths.

The introduction amount of the sulfo group (also including a sulfo group which is (-SO₃ ⁻ ) and is included in a sulfate ester group (-O-SO₃ ⁻ )) of the sulfate-esterified cellulose fiber can be represented by an introduction amount of sulfur, and if the transparency and dispersibility can be maintained to some extent, the introduction amount is not particularly limited.

For example, the introduction amount of sulfur per 1 g (mass) of the sulfate-esterified cellulose fiber is preferably within a range of more than 0.42 mmol/g, more preferably more than 0.42 mmol/g and 9.9 mmol/g or less, still more preferably 0.50 to 9.9 mmol/g, and particularly preferably 0.60 to 9.9 mmol/g.

When the introduction amount of sulfur per 1 g (mass) of the sulfate-esterified cellulose fiber is 0.42 mmol/g or less, since the hydrogen bond between the fibers is strong, the dispersibility tends to decrease. Conversely, since the introduction amount of sulfur is more than 0.42 mmol/g, the dispersibility is easily improved, and if it is 0.50 mmol/g or more, the electronic repulsion can be made stronger, so that the dispersed state can be stably maintained. Meanwhile, as the introduction amount of sulfur approaches 9.9 mmol/g, the crystallinity deteriorates, and the cost for introducing sulfur tends to increase.

Therefore, the introduction amount of sulfur of the sulfate-esterified fine cellulose fiber is preferably adjusted within the above range.

In particular, from the viewpoint of the dispersibility of the fine fiber constituting the sulfate-esterified pulp fibers, the introduction amount of sulfur of the sulfate-esterified cellulose fiber is preferably within a range of more than 0.42 mmol/g and 3.0 mmol/g or less, more preferably 0.50 to 3.0 mmol/g, and still more preferably 0.50 to 2.0 mmol/g.

From the viewpoint of the transparency of the sulfate-esterified cellulose fiber, it is preferable to adjust within the same range as above.

The introduction amount of sulfur of the sulfate-esterified cellulose fiber can be measured by a method in which a predetermined amount of the sulfate-esterified cellulose fiber is burned and the sulfur content contained in the combustion product is measured by the method in conformity with IEC 62321 using the combustion ion chromatograph.

The average fiber length and the average fiber width of the sulfate-esterified cellulose fiber are not particularly limited as long as long as they are adjusted to facilitate the interaction between the fibers and facilitate the transparency when dispersed in water.

The average fiber length of the sulfate-esterified cellulose fiber can be indirectly represented by the polymerization degree.

The polymerization degree is preferably within a range of 30 or more, more preferably 40 to 1,000, and still more preferably 40 to 700.

When the polymerization degree of the sulfate-esterified cellulose fiber is less than 30, the interaction between the fibers is less likely to occur due to a decrease in fiber length. Meanwhile, when the polymerization degree of the sulfate-esterified cellulose fiber exceeds 1,000, the dispersibility deteriorates, and the slurry viscosity of the slurry tends to excessively increase, leading to deterioration of the dispersion stability. Therefore, it is preferable to adjust the polymerization degree of the sulfate-esterified cellulose fiber within the above range. **In** particular, the polymerization degree is preferably adjusted to 40 or more from the viewpoint of ease of generation of the interaction between the fibers, and the polymerization degree is preferably adjusted to 1,000 or less, and more preferably 700 or less, from the viewpoint of the dispersibility and handleability.

The method of measuring the polymerization degree is not particularly limited, but the polymerization degree can be measured, for example, by method in cupri-ethylene-diamine solution. Specifically, the polymerization degree of the sulfate-esterified cellulose fiber can be measured as follows: the sulfate-esterified cellulose fiber is dissolved in the 0.5 M cupri-ethylene-diamine solution and then the viscosity of the solution is measured by the viscosity method.

For the sulfate-esterified cellulose fiber whose fiber length can be visually measured, for example, a wet sulfate-esterified cellulose fiber is filtered to remove a solvent to obtain a fine fiber sheet, which is freeze-dried in liquid nitrogen and SEM observation is performed using a scanning electron microscope (SEM), and it is also possible to determine the average fiber length by calculating the average value of the fiber length of observed 50 fibers.

In particular, when the transparency of the sulfate-esterified cellulose fiber is evaluated, a cellulose fiber is free from turbidity when dissolved in water is preferably used, and thus the turbidity of the aqueous solution can be more appropriately evaluated by the haze value of an aqueous solution having a specific concentration. Specifically, it is possible to measure the haze value of the dispersion in which the sulfate-esterified cellulose fiber is dispersed so as to have a predetermined concentration as follows.

First, a dispersion is prepared by dispersing the sulfate-esterified cellulose fiber in a water-soluble solvent so that the solid content concentration is 0.1 to 20% by mass. When the haze value of such dispersion is 20% or less, it can be said that the sulfate-esterified cellulose fiber can exhibit transparency with little turbidity. Conversely, when the haze value of the dispersion prepared so that the solid content concentration is within the above range is more than 20%, it can be said that appropriate transparency is hard to be exhibited.

For example, when the solid content concentration of the dispersion in which the sulfate-esterified cellulose fiber is dispersed is adjusted to 0.2 to 0.5% by mass, it can be said that it is in a state where the transparency with little turbidity can be properly exhibited if the haze value of this dispersion is 20% or less. In particular, since turbidity of the dispersion can be appropriately suppressed when the sulfate-esterified cellulose fiber is dispersed at a predetermined concentration, the haze value is more preferably 15% or less, and still more preferably 10% or less. Therefore, in order to exhibit a transparent state with little turbidity, the haze value of the sulfate-esterified cellulose fiber prepared so that the solid content concentration is 0.1 to 20% by mass is preferably adjusted within a range of 20% or less, more preferably 15% or less, and still more preferably 10% or less.

Although the water-soluble solvent is not particularly limited, for example, alcohol, ketone, amine, carboxylic acid, ether, amide and the like may be used alone or in two or more thereof, in addition to water alone.

The haze value can be measured, for example, using a spectral haze meter or spectrophotometer in conformity with JIS K 7105. In summary, the sulfate-esterified cellulose fiber is dispersed in the above-mentioned dispersion so as to have a predetermined solid content concentration, and the haze value of the sulfate-esterified cellulose fiber can be obtained by measuring the dispersion using a spectral haze meter or a spectrophotometer in conformity with JIS K 7105. Specifically, the haze value is obtained by attaching an integral spherical [product name: ISN-470, manufactured by JASCO Corporation] to a spectrophotometer [product name: 0V-570, manufactured by JASCO Corporation], and measuring the light transmittance of a 0.5% by mass sulfate-esterified cellulose fiber dispersion with reference to JIS K 7105, using a quartz cell containing pure water as a blank measurement value. The measurement wavelength is within a range of 380 to 780 nm.

The method of producing a sulfate-esterified cellulose fiber is not particularly limited, but a known production method mentioned in, for example, JP 2019-11411 A, JP 6582111 B2, JP 6797215 B2 and the like can be applied.

In particular, as mentioned in JP 65682111 B2, first, a pulp fiber raw material including cellulose such as wood is brought into contact (impregnated) with a reaction solution obtained by dissolving a sulfonating agent such as sulfamic acid and urea or/and a derivative thereof in water, and then the pulp fiber in a wet state is heated to 100 to 180°C and the heated time is adjusted so as to be 5 minutes or more to react, allowing an introduction a sulfo group into at least part of hydrogen atoms of hydroxy groups of the cellulose fiber (i.e. at least part of hydroxy groups are sulfate-esterified) (chemical treatment process). Thereafter, the sulfate-esterified cellulose fiber can be produced by using a low-pressure homogenizer, a high-pressure homogenizer, a grinder (stone mill-type crusher), a ball mill, a cutter mill, a jet mill, a short-axis extruder, a twin-screw extruder, an ultrasonic stirrer, a household mixer and the like to form fine fibers having a predetermined size (refining process).

It is particularly preferable that a sulfate-esterified fine cellulose fiber having a nano-order average fiber width can be efficiently produced by using the above-mentioned method.

The mixing ratio of the sulfate-esterified cellulose fiber is not particularly limited, but the sulfate-esterified cellulose fiber is preferably mixed in the total amount of the ink composition within a range of 0.01 to 3% by mass, and more preferably 0.05 to 1% by mass.

When the mixing ratio is less than 0.01% by mass, it is difficult to obtain the effect of stably holding a desired colorant in a dispersed state, and to obtain the desired dripping prevention effect. Meanwhile, even when the amount of more than 3% by mass is mixed, it is difficult to improve the dispersion stability. It is also impossible to improve the dripping prevention effect even when the amount of more than 3% by mass is added, further addition is not required.

The average particle size of the colorant is not particularly limited, but is preferably within a range of 0.01 to 25 µm, and more preferably 0.05 to 20 µm. When the average particle size of the colorant is within the above range, the dispersion stability in the ink composition is excellent, and the handwriting of a desired color can be easily obtained.

In the measurement of the average particle size, the region of the particles is determined using image analysis type particle size distribution measurement software [manufactured by MOUNTECH Co., Ltd., product name: Mac-View], the projected area circle-equivalent diameter (Heywood diameter) is calculated from the area of the region of the particles, and the average particle size is measured as an average particle size of particles equivalent to an equal volume sphere based on the calculated value.

When the particle size of all or most of the particles exceeds 0.2 µm, the average particle size of particles equivalent to an equal volume sphere may also be measured by a Coulter method using a particle size distribution measuring apparatus [manufactured by Beckman Coulter K.K., product name: Multisizer 4e].

Further, the volume-based particle size and the average particle size may be measured using a calibrated laser diffraction/scattering particle size distribution measuring apparatus [manufactured by HORIBA, Ltd., product name: LA-300], based on the numerical value measured using the software or the measuring apparatus for the Coulter method mentioned above.

In the ink composition according to the embodiments of the present invention, it is also possible to apply colorants having a relatively large average particle size, such as a reversibly thermochromic microcapsule pigment and/or a reversibly photochromic microcapsule pigment, and a glitter pigment as the colorant (hereinafter sometimes referred to as "large particle size colorant").

The colorant having a large average particle size may be easily precipitated over time in the ink composition and may be inferior in dispersion stability. In particular, when the ink composition has low viscosity, the ink composition tends to be more easily inferior to dispersion stability. However, the ink composition according to the embodiments of the present invention suppresses the precipitation of the large-particle size colorant over time by using the above-mentioned sulfate-esterified cellulose fiber, and thus the large particle size colorant exhibits satisfactory dispersion stability. When using the sulfate-esterified fine cellulose fiber, the large particle size colorant can be stably dispersed over a long period of time while maintaining low viscosity of the ink composition.

The glitter pigment is not particularly limited as long as the pigment exhibits glittering due to reflection of light, and examples thereof include natural pigments such as fish foil, pigments obtained by coating a base material having transparency with metal oxide or metal, metal pigments and the like.

Examples of the pigment in which the transparent base material is coated with the metal oxide include those obtained by coating the surface of materials selected from natural mica, synthetic mica, flat glass (flake-like glass), silica flake, flaky aluminum oxide and the like, as the base material, with metal oxide.

Examples of the metal oxide include oxides of titanium, zirconia, chromium, vanadium, iron and the like, but titanium oxide is suitable.

Depending on the coating ratio of the metal oxide with which the surface of the base material is coated, and the thickness of the coating film, gold color or silver color, or yellow, red, blue or green color having metallic luster is exhibited. Iron oxide and/or non color-changing colorants such as general dye or pigment may be further coated on the layer by metal oxide such as titanium oxide.

The pigment in which the transparent base material is coated with metal oxide also includes pearl pigments and cholesteric liquid crystal pigments.

Examples of the pigment obtained by coating a transparent base material with metal include flake-like glass coated with silver, flake-like glass coated with gold, flake-like glass coated with nickel-chromium molybdenum, flake-like glass coated with silver alloy, and flake-like glass coated with titanium.

The pigment obtained by coating a transparent base material with metal can be obtained by, for example, coating flake-like glass with metal by an electroless plating method, a sputtering method or the like.

Examples of the metal pigment include an aluminum powder pigment.

Examples of the aluminum powder pigment include those obtained by grinding and polishing aluminum piece with a petroleum-based solvent such as higher fatty acid or mineral spirit using a ball mill. Such an aluminum powder pigment is very thin scaly aluminum fine particle, and can be used in a paste form.

The thin film-like aluminum obtained by vacuum deposition may be finely pulverized.

The average particle size of the reversibly thermochromic microcapsule pigment or reversibly photochromic microcapsule pigment is preferably within a range of 0.1 to 5 µm, more preferably 0.5 to 4 µm, and still more preferably 0.5 to 3 µm. When the average particle size exceeds 5 µm, it is difficult to obtain satisfactory ink discharging properties when the microcapsule pigment is used for a writing instrument. When the average particle size is less than 0.1 µm, the handwriting is less likely to exhibit high-density color-development property.

The average particle size of the glitter pigment is preferably within a range of 3 to 25 µm, and more preferably 5 to 20 µm. When the average particle size exceeds 25 µm, it is difficult to obtain satisfactory ink discharging properties when the glitter pigment is used for a writing instrument. When the average particle size is less than 3 µm, the handwriting is less likely to exhibit sufficient glittering.

Although the specific gravity of the colorant is not particularly limited, it is also possible to apply a colorant having a specific gravity of more than 1 (hereinafter sometimes referred to as "high specific gravity colorant") as a colorant to the ink composition according to the embodiments of the present invention. That is, the embodiments of the present invention may include a colorant having a specific gravity of more than 1 (at least part of the colorant may have a specific gravity of more than 1).

The colorant having a specific gravity of more than 1 may easily settle over time in the ink composition and may be inferior in dispersion stability. In particular, when the ink composition has low viscosity, the ink composition tends to be more easily inferior to dispersion stability. However, settling of the high specific gravity colorant over time can be suppressed by using the above-mentioned sulfate-esterified cellulose fibers in the ink composition according to the embodiments of the present invention, and the high specific gravity colorant exhibits satisfactory dispersion stability. When using the sulfate-esterified fine cellulose fiber, the high specific gravity colorant can be stably dispersed over a long period of time while maintaining low viscosity of the ink composition.

Examples of the high specific gravity colorant include inorganic pigments, organic pigments, glitter pigments, or microcapsule pigments or resin particles using the same, and reversibly thermochromic microcapsule pigments having a large hysteresis width (ΔH).

Examples of the organic pigment include Benzidine Yellow, Permanent Red, Lake Red, Victoria Blue Lake, Phthalocyanine Blue, Phthalocyanine Green, Aniline Black and the like. The specific gravity is within a range of 1.2 to 2.9.

Examples of the inorganic pigment include Carbon Black, Ultramarine, and rutile or anatase titanium oxides. The specific gravity of Carbon Black and Ultramarine is within a range of 1.4 to 5.5, and the specific gravity of titanium oxide is within a range of 3.7 to 4.2.

Examples of the glitter pigment include pigments in which the above-mentioned base material having transparency is coated with metal oxide or metal, metal pigments and the like.

Regarding the specific gravity of the pigment in which a base material having transparency is coated with metal oxide, the specific gravity of the pearl pigment is within a range of 2.8 to 3.2, and the specific gravity of the cholesteric liquid crystal pigment is within a range of 1.1 to 1.5.

The specific gravity of the pigment in which a base material having transparency is coated with a metal is within a range of 3.0 to 3.4.

The specific gravity of the metal pigment is within a range of 2.5 to 9.0.

The reversibly thermochromic microcapsule pigment having large hysteresis width tends to use a compound having two or more aromatic rings in the molecule as the component (C), and tends to increase the specific gravity.

The specific gravity of the reversibly thermochromic microcapsule pigment varies depending on the particle size, the component included in the microcapsule, the content of the component, the component of the capsule wall film, the film thickness, the colored state of the microcapsule pigment, and the temperature. From the viewpoint of the dispersion stability in the ink composition, the specific gravity of the reversibly thermochromic microcapsule pigment is preferably within a range of 1.05 to 1.20, more preferably 1.10 to 1.20, and still more preferably 1.12 to 1.15, when the microcapsule pigment is in a completely colored state and water is used as a reference substance in an environment at 20°C.

The specific gravity of the reversibly thermochromic microcapsule pigment can be measured by the following method.

### (Method of Measuring Specific Gravity of Reversibly Thermochromic Microcapsule Pigment)

1. 30 ml of an aqueous glycerin solution and 1 g of a completely colored state reversibly thermochromic microcapsule pigment are introduced into a screw tube bottle and mixed to obtain a microcapsule pigment dispersion.
2. The temperature of 30 ml of the microcapsule pigment dispersion is adjusted to 20°C, and the microcapsule pigment dispersion is set in a centrifuge at a rotation speed of 1,000 rpm for 30 seconds. As the centrifuge, a desktop cooling centrifuge [product name: H103N, manufactured by KOKUSAN Co., Ltd.] can be used.
3. The microcapsule pigment dispersion is observed.

When most of the microcapsule pigment is precipitated at a bottom of a beaker, the operations of 1 to 2 are performed again using an aqueous solution having a higher glycerin concentration than the aqueous glycerin solution at this time, and the state of the dispersion is observed.

When a state where most of the microcapsule pigment are floating on the liquid surface is confirmed, the operations of 1 to 2 are performed again using an aqueous solution having a lower glycerin concentration than the aqueous glycerin solution at this time, and the state of the dispersion is observed.

The above series of operations are repeated until not the state where most of the microcapsule pigments are floating on the liquid surface or are precipitated, but a state where the portions other than the liquid surface of the aqueous glycerin solution and the vicinity of the bottom of the screw tube bottle are uniformly colored is visually confirmed. The specific gravity of the aqueous glycerin solution at the time when this state is observed is measured, and the measured specific gravity is determined as the specific gravity of the microcapsule pigment. The specific gravity of the aqueous glycerin solution can be measured by the hydrometer method mentioned in JIS K0061 7.1 for an aqueous solution adjusted to 20°C.

The specific gravity of the high specific gravity colorant is preferably within a range of 1.01 to 5.00, and more preferably 1.05 to 4.50.

The ink composition according to the embodiments of the present invention may be mixed with a thickener. By using the sulfate-esterified cellulose fiber in combination with the thickener, the colorant can be stably held in a dispersed state over a long period of time while making the viscosity lower than that of the ink composition using a conventional thickener alone.

As the thickener, it is preferable to use a substance capable of imparting shear thinning to the ink composition (shear thinning agent).

The ink composition using the shear thinning agent is difficult to flow with high viscosity in a standing state or when the stress is low, and the viscosity is easily lowered when stress is applied from the outside. Thus, it is possible to prevent leakage of the ink and to prevent separation and backflow of the ink at the time of non-writing, and it is easy to improve ink discharge stability from the pen tip at the time of writing.

When the ink composition according to the embodiments of the present invention contains a thickener, the mixing ratio of the thickener is not particularly limited, but is preferably within a range of 0.1 to 20% by mass in the total amount of the ink composition.

Examples of the shear thinning agent include one or more selected from the group consisting of water-soluble polysaccharides, polymers containing an alkyl ester of methacrylic acid as a main component and having a molecular weight of 100,000 to 150,000, poly-N-vinyl carboxylic acid amide crosslinked products, benzylidene sorbitol and derivatives thereof, benzylidene xylitol and derivatives thereof, alkali thickened acrylic resins, crosslinkable acrylic acid polymers, inorganic fine particles, nonionic surfactants having an HLB value of 8 to 12, and metal salts or amine salts of dialkylsulfosuccinic acid.

It should be noted that the shear thinning viscosity of the ink refers to a rheology property in which the ink is less likely to flow at high viscosity in a state of rest or when a stress is low, while when the stress is increased, the viscosity is reduced to exhibit satisfactory fluidity, and means a liquid property also referred to as a thixotropic property or pseudo-plasticity.

When the ink composition according to the embodiments of the present invention contains a shear thinning agent, the mixing ratio of the shear thinning agent is not particularly limited, but the shear thinning agent is mixed within a range of preferably 0.05 to 1% by mass in the total amount of the ink composition.

Examples of water-soluble polysaccharides include xanthan gum, welan gum, zetasea gum, diutan gum, macrophomopsis gum, succinoglycan (e.g., the constituent monosaccharide is an organic acid-modified heteropolysaccharide of glucose and galactose (having an average molecular weight of about 1,000,000 or more and 8,000,000 or less)), guar gum, locust bean gum, and derivatives thereof, alginic acid alkyl esters, glucomannan, and carbohydrates having gelling ability extracted from seaweed such as agar and carrageenan. Although the water-soluble cellulose derivatives containing hydroxyethyl cellulose can also belong to water-soluble polysaccharides, in the present disclosure, the water-soluble cellulose derivatives containing hydroxyethyl cellulose do not belong to a water-soluble polysaccharide (that is, a shear thinning agent), and belong to a polymer coagulant to be mentioned later.

Since the dispersion stability of the colorant can be further improved, xanthan gum or succinoglycan is preferable as the thickener (shear thinning agent) to be used in combination with the sulfate-esterified cellulose fiber.

The shear thinning agent may be used alone or in combination of two or more thereof.

The ink composition according to the embodiments of the present invention may be mixed with a polymer coagulant. By mixing with the polymer coagulant, the polymer coagulant forms a gentle aggregate via the polymer coagulant, and thus colorants are prevented from being brought into contact with each other, leading to an improvement in dispersibility of the colorant. By using the polymer coagulant in combination with the sulfate-esterified cellulose fiber, the colorant can be stably held in the ink composition, thus making it possible to reduce the mixing amount of the sulfate-esterified cellulose fiber in the ink composition.

When the ink composition according to the embodiments of the present invention contains a polymer coagulant, the mixing ratio of the polymer coagulant is not particularly limited, but is preferably within a range of 0.05 to 1% by mass.

Examples of the polymer coagulant include polyvinylpyrrolidone, polyethylene oxide, water-soluble cellulose polysaccharides and the like.

Examples of the water-soluble cellulose polysaccharides include carboxymethyl cellulose, methyl cellulose, hydroxyethyl cellulose, hydroxypropyl cellulose, hydroxyethyl methyl cellulose, hydroxypropyl methyl cellulose and the like.

When the ink composition according to the embodiments of the present invention is used in a writing instrument (ballpoint pen) equipped with a ballpoint pen tip, the ink composition may also be mixed with a lubricant.

The lubricant improves lubricity between a ball receiving seat provided inside a tip main body and a ball provided at the front end of the tip main body, can easily prevent wear of the ball receiving seat, and can improve the feeling while writing.

Examples of the lubricant include higher fatty acids such as oleic acid, nonionic surfactants having a long chain alkyl group, polyether-modified silicone oils, thiophosphorous acid triesters such as thiophosphorous acid tri(alkoxycarbonyl methyl ester) and thiophosphorous acid tri(alkoxycarbonyl ethyl ester), and phosphate ester-based surfactants such as phosphoric acid monoesters of polyoxyethylene alkyl ethers or polyoxyethylene alkyl aryl ethers, phosphoric acid diesters of polyoxyethylene alkyl ethers or polyoxyethylene alkyl aryl ethers, or metal salts, ammonium salts, amine salts and alkanolamine salts of these phosphate esters. It is also possible to use metal soap, polyalkylene glycol fatty acid ester, ethylene oxide addition type cationic activator, β-alanine type surfactant, N-acylamino acid, N-acylmethyltaurine, 2,5-dimercapto-1,3,4-thiadiazole and salts or oligomers thereof, 3-amino-5-mercapto-1,2,4-triazole, thiocarbamate, dimethyldithiocarbamate, α-lipoic acid, condensate of N-acyl-L-glutamic acid and L-lysine and salts thereof.

The ink composition according to the embodiments of the present invention may be mixed with various additives such as water-soluble organic solvents, dispersants, water-soluble resins, surfactants, pH adjusters, rust inhibitors, preservatives or fungicides, humectants, bubble absorbers, defoamers, specific gravity adjusters, antioxidants, UV absorbers and the like. These additives can be selected from those conventionally applied to the aqueous ink and appropriately used.

When the colorant is a reversibly thermochromic microcapsule pigment or a reversibly photochromic microcapsule pigment, or reversibly thermochromic resin particles or reversibly photochromic resin particles, mixing a non-color-changing colorant such as a general dye or pigment allows the ink composition to exhibit a color-changing behavior from a color (1) to a color (2).

A method for producing the ink composition according to the embodiments of the present invention is not particularly limited, and any conventionally known method may be used.

Specifically, the ink composition may be produced by stirring a mixture containing the above components with various stirrers such as propeller stirring, homodisper, or homomixer, or by dispersing the mixture with various dispersers such as a bead mill.

When the ink composition according to the embodiments of the present invention is used for a ballpoint pen, the viscosity is preferably within a range of 1 to 2,000 mPa·s, more preferably 3 to 1,500 mPa·s, and still more preferably 5 to 1,000 mPa·s, as measured under the condition of a rotation speed of 1 rpm (shear rate of 3.84 sec⁻¹) in an environment of 20°C. The viscosity is preferably within a range of 1 to 200 mPa·s, more preferably 3 to 100 mPa·s, and still more preferably 5 to 50 mPa·s, as measured under the condition of a rotation speed of 100 rpm (shear rate of 384 sec⁻¹) in an environment of 20°C. When the viscosity is within the above range, the stability of the ink composition and the easy fluidity of the ink composition in the mechanism of the ballpoint pen can be maintained at a high level.

The viscosity of the ink composition is a value measured using a rheometer [manufactured by TA Instruments, product name: Discovery HR-2, cone plate (diameter 40 mm, Angle 1°)] under the condition of a rotation speed of 1 rpm (shear rate of 3.84 sec-¹) or a rotation speed of 100 rpm (shear rate of 384 sec⁻¹) with the ink placed in an environment of 20°C.

When the ink composition according to the embodiments of the present invention is used in a marking pen, the viscosity thereof is preferably within a range of 1 to 30 mPa·s, more preferably 1 to 20 mPa·s, and still more preferably 1 to 10 mPa·s, as measured under the condition of a rotation speed of 20 rpm in an environment of 20°C. When the viscosity is within the above range, the stability and fluidity of the ink composition can be maintained at a high level.

The viscosity of the ink composition is a value measured using an E-type rotational viscometer [manufactured by Toki Sangyo Co., Ltd., product name: RE-85 L, cone-type rotor: standard type (1°34' × R24)] with the ink composition under an environment of 20°C.

When the pH of the ink composition according to the embodiments of the present invention is preferably within a range of 6 to 10, and more preferably 7 to 9. When the pH is within the above range, an increase in excessive viscosity and deterioration of the ink composition can be suppressed.

The pH of the ink composition is a value measured using a pH meter [manufactured by DKK-TOA CORPORATION, product name: IM-40S] with the ink placed in an environment of 20°C.

Examples of the writing instrument in which the ink composition is contained according to the embodiments of the present invention include various writing instruments such as a ballpoint pen, a marking pen, a fountain pen, a brush pen and a calligraphy pen.

When the ink composition according to the embodiments of the present invention is used for a ballpoint pen, the structure and shape of the ballpoint pen itself are not particularly limited, and for example, a ballpoint pen refill or a ballpoint pen including a ballpoint pen tip and an ink filling mechanism is filled with the ink composition.

The ballpoint pen tip includes a tip main body and a ball provided at the front end of the tip main body. Examples of the ballpoint pen tip include a tip obtained by holding a ball in a ball holding part obtained by pressing and deforming the vicinity of a tip of a tip main body made of a metal pipe inward from an outer surface, a tip obtained by holding a ball in a ball holding part formed by cutting a tip main body made of a metal material by a drill or the like, a tip provided with a ball receiving seat made of resin inside a metal or plastic tip main body, and a tip obtained by biasing a ball held in the tip forward by a spring body.

The material of the tip main body and the ball is not particularly limited, and examples thereof include cemented carbide, stainless steel, ruby, ceramic, resin, rubber and the like. Further, the ball may be subjected to a surface treatment such as DLC coating.

The diameter of the ball is preferably 0.1 to 3 mm or 0.2 to 3 mm, 0.1 to 2 mm, 0.2 to 2 mm, 0.2 to 1.5 mm, 0.2 to 1.2 mm, 0.2 to 1 mm, and 0.28 to 1 mm in this order

In the ballpoint pen tip, a resilient member for resiliently extruding the rear end of the ball to the front is disposed in the tip, and when not writing, the ball is pressed to the inner edge of the tip end to be brought into a close contact state. During writing, the ball can be retracted by the writing pressure to allow the ink to flow out, and ink leakage when not in use can be suppressed.

The resilient member is applied with a spring of a thin metal wire, a spring having a straight portion (rod portion) at one end of the spring, a linear plastic processed body and the like, and is configured to be capable of pressing by a resilient force of 5 to 40 g.

Examples of the ink filling mechanism include an ink container that can be directly filled with ink.

As the ink container, for example, a molded body made of a thermoplastic resin such as polyethylene, polypropylene, polyethylene terephthalate, or nylon, or a metal tubular body is used.

A ballpoint pen refill (hereinafter, sometimes referred to as "refill") may be formed by directly connecting a ballpoint pen tip to the ink container or via a connecting member and directly filling the ink container with the ink. A ballpoint pen may be formed by containing the refill in an axial barrel.

The back end of the ink filled in the ink container is filled with an ink backflow inhibitor. Examples of the ink backflow inhibitor include a liquid plug or a solid plug.

The liquid plug is made of a nonvolatile liquid and/or a hardly volatile liquid, and examples thereof include petrolatum, spindle oil, castor oil, olive oil, refined mineral oil, liquid paraffin, polybutene, α-olefin, oligomer or cooligomer of α-olefin, dimethyl silicone oil, methyl phenyl silicone oil, amino-modified silicone oil, polyether-modified silicone oil, fatty acid-modified silicone oil and the like.

The nonvolatile liquid and/or the hardly volatile liquid may be used alone or in combination of two or more thereof.

It is preferable to add a thickener to the nonvolatile liquid and/or the hardly volatile liquid to thicken the viscosity to a suitable viscosity.

Examples of the thickener include clay-based thickeners such as silica whose surface is hydrophobically treated, fine particle silica whose surface is methylated, aluminum silicate, swellable mica, hydrophobically treated bentonite and montmorillonite; fatty acid metal soaps such as magnesium stearate, calcium stearate, aluminum stearate, and zinc stearate; tribenzylidene sorbitol; fatty acid amide; amide-modified polyethylene wax; hydrogenated castor oil; and dextrin-based compounds such as fatty acid dextrin; cellulose-based compounds and the like.

Examples of the solid plug include solid plugs made of polyethylene, polypropylene, polymethylpentene and the like.

As the ink backflow inhibitor, the solid plug and the liquid plug mentioned above may be used in combination.

A ballpoint pen including a ballpoint pen tip and an ink filling mechanism may be formed by using the axial barrel itself as an ink filling mechanism, directly filling the axial barrel with ink, and attaching a ballpoint pen tip to the front end of the axial barrel.

When the ink to be filled in the ink filling mechanism has a low viscosity, the ballpoint pen including the ballpoint pen tip and the ink filling mechanism may further include an ink supplying mechanism for supplying the ink to be filled in the ink filling mechanism to the pen tip.

The ink supplying mechanism is not particularly limited, and examples thereof include (1) a mechanism in which an ink guide core formed of fiber bundles or the like is provided as an ink flow rate regulator and the ink is supplied to a pen tip through the ink guide core, (2) a mechanism in which a comb-groove-shaped ink flow regulator is provided and the ink is supplied to the pen tip through the ink flow regulator, and (3) a mechanism in which the ink is supplied to the pen through a pen core in which: a large number of disk bodies are disposed in parallel at intervals in a comb groove shape; a slit-shaped ink guide groove penetrating the disk body in the axial direction and a ventilation groove having a larger width than the groove are provided; and an ink guide core for guiding the ink from the ink filling mechanism to the pen tip is disposed at an axial center.

The material of the pen core is not particularly limited as long as it is a synthetic resin capable of injection-molding a large number of disk bodies into a comb groove-shaped structure. In particular, an acrylonitrile-butadiene-styrene copolymer (ABS resin) is suitably used because it has high moldability and easily obtains pen core performance.

Specific examples of the configuration of the ballpoint pen containing the ink composition according to the embodiments of the present invention include: (1) a ballpoint pen including an ink container filled with ink in an axial barrel, in which a ballpoint pen tip is connected to the ink container directly or via a connecting member, and an ink backflow inhibitor is filled at an end surface of the ink; (2) a ballpoint pen including a mechanism in which an axial barrel is directly filled with ink and the ink is supplied to a pen tip by interposing a comb-shaped ink flow rate regulator or an ink guide core composed of a fiber bundle or the like interposed as an ink flow rate regulator; (3) a ballpoint pen including a mechanism in which an axial barrel is directly filled with ink and the ink is supplied to a pen tip via the pen core mentioned above.

When the ink composition according to the embodiments of the present invention is used for a marking pen, the structure and shape of the marking pen itself are not particularly limited, and for example, a marking pen refill or a marking pen including a marking pen tip and an ink filling mechanism is filled with the ink composition.

As the marking pen tip, for example, a general-purpose porous member having communicating pores selected from a range of around 30 to 70% in porosity, such as a fiber resin processed product, a hotmelt fiber fusion processed product, and a felt product, or an extruded product of a synthetic resin having a plurality of ink lead-out holes extending in the axial direction can be exemplified, and one end thereof is processed into a shape according to a purpose such as a cannonball shape, a rectangular shape, and a chisel shape and put to practical use.

Examples of the ink filling mechanism include an ink occlusion body that can be filled with ink.

The ink occlusion body is a fiber bundle body in which crimped fibers are bundled in the longitudinal direction, and is configured by incorporating the crimped fibers in a covering body such as a plastic cylinder or a film and adjusting the porosity to be in a range of about 40 to 90%.

A marking pen may be formed by containing the ink occlusion body impregnated with ink in an axial barrel and connecting the marking pen tip to the axial barrel directly or via a connecting member so as to be connected to the ink occlusion body.

A marking pen refill (hereinafter sometimes referred to as "refill") may be formed by containing an ink occlusion body impregnated with ink in an ink container and connecting a marking pen tip to the ink container directly or via a connecting member so as to be connected to the ink occlusion body. A marking pen may be formed by containing the refill in an axial barrel.

As the ink container, for example, a molded body made of a thermoplastic resin such as polyethylene, polypropylene, polyethylene terephthalate or nylon, or a metal tubular body is used.

The marking pen including the marking pen tip and the ink filling mechanism may further include an ink supplying mechanism for supplying the ink composition to be filled in the ink filling mechanism to the pen tip.

The ink supplying mechanism is not particularly limited, and examples thereof include (4) a mechanism including an ink flow rate regulator with a valve opening mechanism and supplying ink to the pen tip, in addition to the above-mentioned ink supplying mechanism included in the ballpoint pen.

As the valve opening mechanism, a general-purpose pumping type valve mechanism that is opened by pressing a tip may be used, and a valve opening mechanism that is set to a spring pressure that can be pressed and opened by pen pressure is preferable.

When the marking pen includes the ink supply mechanism, an ink container that can be directly filled with ink may be used as the ink filling mechanism in addition to the above-mentioned ink occlusion body. Alternatively, the axial barrel itself may be used as an ink filling mechanism to directly fill the axial barrel with the ink.

Specific examples of the configuration of the marking pen containing the ink composition according to the embodiments of the present invention include (1) a marking pen in which an ink occlusion body composed of a fiber bundle impregnated with ink is contained in an axial barrel, and a marking pen tip composed of a fiber processed body or a resin molded body in which a capillary gap is formed is connected to the axial barrel directly or via a connecting member such that the ink occlusion body and the tip are connected to each other, (2) a marking pen in which an axial barrel is directly filled with ink, and a mechanism for supplying ink to a pen tip by interposing a comb-groove-shaped ink flow rate regulator, or an ink guide core composed of a fiber bundle or the like as an ink flow rate regulator is provided, (3) a marking pen in which an axial barrel is directly filled with ink, and a mechanism for supplying ink to a pen tip via the above-mentioned pen core is provided, and (4) a marking pen including a tip and an ink container via a valve opening mechanism that opens a valve by pressing the tip, the ink container being directly filled with the ink.

When the ballpoint pen or the marking pen according to the embodiments of the present invention is directly filled with ink, in order to facilitate redispersion of the colorant, a stirring body such as a stirring ball for stirring the ink may be incorporated in the ink container or the axial barrel to be filled with the ink. Examples of the shape of the stirring body include a spherical body and a rod body. The material of the stirring body is not particularly limited, and examples thereof include metal, ceramic, resin, and glass.

Further, the writing instrument such as a ballpoint pen or a marking pen according to the embodiments of the present invention may have an ink cartridge form as a detachable structure. In this case, after the ink contained in the ink cartridge of the writing instrument is used up, the ink cartridge can be replaced with a new ink cartridge, and thus the writing instrument can be used again.

As the ink cartridge, an ink cartridge that also serves as an axial barrel constituting the writing instrument by being connected to a writing instrument main body, or an ink cartridge that covers and protects the axial barrel (rear shaft) after being connected to the writing instrument main body is used. In the latter case, the ink cartridge may be used alone, or the writing instrument before use may have a structure in which the writing instrument body and the ink cartridge are connected, and a structure in which the ink cartridge is contained in the axial barrel in a non-connected state so that a user of the writing instrument starts use by connecting the ink cartridge in the axial barrel at the time of use.

Further, the writing instrument such as a ballpoint pen or a marking pen according to the embodiments of the present invention is provided with a cap attached to cover a pen tip (writing tip part) to form a cap-type writing instrument, with which it is possible to prevent the writing tip part from being contaminated or damaged.

The writing instrument such as a ballpoint pen or the marking pen in which a refill is contained in an axial barrel may be formed into a retractable writing instrument by providing a retractable mechanism in the axial barrel, the retractable mechanism enabling the writing tip part to be retracted from the axial barrel, with which the writing tip part can be prevented from being contaminated or damaged. Since the pen tip of a retractable writing instrument (e.g., retractable ballpoint pen) is always exposed to the outside air, the ink composition according to the embodiments of the present invention is particularly effective.

The retractable writing instrument may be used as long as the writing tip part is contained in the axial barrel in a state where the writing tip part is exposed to the outside air, and the writing tip part protrudes from the axial barrel opening by the operation of the retractable mechanism.

It is also possible to provide a composite type retractable writing instrument in which a plurality of refills are contained in an axial barrel and the writing tip part of any of the refills is caused to protrude and retract from an axial barrel opening by the operation of the retractable mechanism.

As the retractable mechanism, for example, (1) a side slide type retractable mechanism in which an operation part (clip) movable in a front-rear direction from a rear side wall of a axial barrel is protruded outward in a radial direction, and a writing tip part is retracted from a front end opening of the axial barrel by sliding the operation part forward, (2) a rear end knock type retractable mechanism in which a writing tip part is retracted from a front end opening of the axial barrel by pressing an operation part provided at the rear end of the axial barrel forward, (3) a side knock type retractable mechanism in which the writing tip part is retracted from a front end opening of the axial barrel by pressing an operation part protruding from the outer surface of the axial barrel side wall inward in the radial direction, and (4) a rotary type retractable mechanism in which a writing tip part is retracted from a front end opening of the axial barrel by rotating an operation part provided at a rear of the axial barrel.

Further, the form of the ballpoint pen and the marking pen is not limited to the above configuration, and may be a composite writing instrument (a double-headed writing instrument and a pen tip retractable writing instrument) in which tips of different forms are mounted, tips for deriving inks of different color tones or hues are mounted, or tips of different forms are mounted and color tones or hues of inks derived from the respective tips are different from each other.

The writing instrument containing the ink composition according to the embodiments of the present invention is preferably a writing instrument (ballpoint pen) having the form of being equipped with a ballpoint pen tip as the pen tip. The ink composition according to the embodiments of the present invention has a high viscosity at the time of standing without application of shear stress, and thus the ink composition is stably kept in the ballpoint pen, leading to satisfactory dispersion stability of the colorant. Thus, at the time of writing, a strong shear stress is applied to the ink composition with rotation of the ball, and the viscosity of the ink composition in the vicinity of the ball is easily reduced, and thus the ink discharge stability can be improved. That is, the ink composition according to the embodiments of the present invention is suitably used for a ballpoint pen because writing defects such as faint parts and/or line skipping are suppressed, the feeling while writing is better and color-development property of handwriting is excellent. Further, since the ballpoint pen tip has poor ink holding power at the pen tip and is likely to cause dripping, the ink composition according to the embodiments of the present invention is suitably used for the ballpoint pen.

When a reversibly thermochromic microcapsule pigment or a reversibly thermochromic resin particle is used as the colorant, the handwriting formed on the writing surface using the writing instrument containing the ink composition according to the embodiments of the present invention can change its color by rubbing with a finger, by a heating tool and/or a cooling tool.

Examples of the heating tool include an electric heating and color-changing tool equipped with a resistance heating element such as a PTC device, a heat color-changing tool filled with a medium such as hot water, a heating and color-changing tool using steam and laser light, and application of a hair dryer. A friction member and a friction body are preferable because color change can be achieved by a simple method.

Examples of the cooling tool include application of an electric cooling and color-changing tool using a Peltier device, a cooling and color-changing tool filled with a refrigerant such as cold water and an ice piece, a storage cooling agent, a refrigerator, and a freezer.

As the friction member and the friction body, an elastic body such as an elastomer, a plastic foam, or the like, which is rich in elastic feeling and can generate appropriate friction at the time of rubbing to generate frictional heat, is preferable, but a plastic molded body, a stone, wood, metal, fabric or the like may also be used. A common eraser used for erasing the handwriting with a pencil may be used to scrub the handwriting, but with the eraser, eraser dust is generated during the scrubbing. Thus, the friction member and the friction body from which eraser dust is hardly generated are suitably used.

Examples of the material of the friction member and the friction body include silicone resin and styrene-ethylene-butadiene-styrene block copolymer (SEBS resin). With silicon resin, the resin easily adheres to the part erased by rubbing, and the handwriting tends to be repelled when writing is repeated. Thus, SEBS resin is more suitably used.

The friction member or the friction body may be a member having any shape separated from the writing instrument, but it is possible to achieve excellent portability by providing the friction member or the friction body in the writing instrument. A writing instrument set may also be obtained by combining the writing instrument with a friction member or a friction body having any shape separated from the writing instrument.

When the writing instrument is a writing instrument equipped with a cap, a place where the friction member or the friction body is provided is not particularly limited. For example, the cap itself may be formed of a friction member, the axial barrel itself may be formed of a friction member, or when a clip is provided, the clip itself may be formed of a friction member, or the friction member or the friction body may be provided at a cap tip part (top part), an axial barrel rear end part (a part not provided with a writing tip part) or the like.

In the case of a writing instrument equipped with a retractable mechanism, a place where the friction member or the friction body is provided is not particularly limited. For example, when an axial barrel itself is formed of a friction member, or a clip is further provided, the clip itself may be formed of the friction member, or the friction member or the friction body may be provided in the vicinity of an axial barrel opening, an axial barrel rear end (a part not provided with a writing front end), or a knock part.

### EXAMPLES

Examples are shown below, but the embodiments of the present invention are not limited to these Examples. Unless otherwise specified, "parts" in Examples indicates "parts by mass".

### [Example 1]

The following Example 1 shows that, regarding the ink composition according to the embodiments of the present invention, and a writing instrument containing the same, the colorant is less likely to cause aggregation and/or settling over time and satisfactory handwriting can be formed.

### Preparation of Ink Composition (Example 1-1)

30 Parts of a blue pigment water dispersion (Pigment Blue 15:3) (solid content: 20%, average particle size: 0.2 µm), 0.08 part of a sulfate-esterified cellulose fiber A, 0.12 part of a shear thinning agent (xanthan gum) [manufactured by Sansho Co., Ltd., product name: KELZAN], 0.5 part of a surfactant [manufactured by Dai-ichi Kogyo Seiyaku Co., Ltd., product name: Plysurf AL,], 1 part of triethanolamine, 10 parts of diethylene glycol, 5 parts of glycerin, and 53.3 parts of water to prepare an ink composition.

### Fabrication of Writing Instrument (Example 1-1)

An ink container formed of a polypropylene pipe was filled with the above ink composition by suction, and then the ink container was connected to a ballpoint pen tip holding a cemented carbide ball having a diameter of 0.5 mm at its tip through a resin holder. Next, a viscoelastic ink backflow inhibitor (liquid plug) containing polybutene as a main component was filled from a rear end of the ink container, and a tail plug was fitted to a rear part of the pipe, and degassing treatment was performed by centrifugation to obtain a ballpoint pen refill.

Next, the above refill was incorporated into an axial barrel to produce a ballpoint pen (retractable ballpoint pen).

The above ballpoint pen has a structure in which the tip provided on the ballpoint pen refill is contained in the axial barrel in a state of being exposed to the outside air, and the tip protrudes by the operation of a clip-shaped retractable mechanism (slide mechanism) provided on the rear side wall of the axial barrel.

### Preparation of Ink Composition (Examples 1-2 to 1-17 and Comparative Examples 1-1 to 1-12)

Ink compositions of Examples 1-2 to 1-17 and Comparative Examples 1-1 to 1-12 were fabricated in the same manner as in Example 1-1, except that the type and the amount of the material to be mixed are changed to those mentioned in Table 1 and Table 2 below.

### Fabrication of Writing Instrument (Examples 1-2 to 1-13 and Comparative Examples 1-1 to 1-9)

Writing instruments of Examples 1-2 to 1-13 and Comparative Example 1-1 to 1-9 were fabricated in the same manner as in Example 1-1.

### Fabrication of Writing Instrument (Examples 1-14 to 1-15 and Comparative Examples 1-10)

Each of the ink compositions of Example 1-14 to 1-15 and Comparative Example 1-10 was impregnated into an ink occlusion body made of polyester sliver covered with a synthetic resin film and, after containing in an axial barrel made of a polypropylene resin, a resin-processed pen body (cannonball type) comprising an extrusion molded product of a polyacetal resin having a plurality of ink lead-out holes extending in the axial direction was assembled at a tip part of the axial barrel in a connected state through a resin holder and a cap was attached to fabricate a marking pen (cap-type marking pen).

### Fabrication of Writing Instrument (Examples 1-16 to 1-17 and Comparative Examples 1-11 to 1-12)

Each of the ink compositions of Examples 1-16 to 1-17 and Comparative Examples 1-11 to 1-12 was impregnated into an ink occlusion body of polyester sliver covered with a synthetic resin film and, after containing in an axial barrel made of a polypropylene resin, a resin-processed pen body (chisel type) of the polyester fiber is assembled at a tip part of the axial barrel in a connected state through a resin holder and a cap was attached to fabricate a marking pen (cap-type marking pen).

**[Table 1]**

| Name of materials | | Example | | | | | | | | | | | | | | | | |
|---|---|---|---|---|---|---|---|---|---|---|---|---|---|---|---|---|---|---|
| | Note | 1-1 | 1-2 | 1-3 | 1-4 | 1-5 | 1-6 | 1-7 | 1-8 | 1-9 | 1-10 | 1-11 | 1-12 | 1-13 | 1-14 | 1-15 | 1-16 | 1-17 |
| Colorant A | (1-1) | 30 | | | | | | 20 | | | 30 | | | | | | | |
| Colorant B | (1-2) | | 6 | | | | | | | | | | | | 6 | | | |
| Colorant C | (1-3) | | | 15 | 15 | 15 | | | 14 | | | 15 | | 15 | | 14 | 15 | 15 |
| Colorant D | (1-4) | | | | | | 6.5 | | | | | | | | | | | |
| Colorant E | (1-5) | | | | | | | 2.5 | 1 | | | | | | | | | |
| Colorant F | (1-6) | | | | | | | | | 10 | | | | | | | | |
| Colorant G | (1-7) | | | | | | | | | | | | 28 | | | | | |
| Sulfate-esterified cellulose fiber A | (1-8) | 0.08 | | | | | 0.12 | | | | | | | | | | | |
| Sulfate-esterified cellulose fiber B | (1-9) | | 0.06 | | | | | 0.1 | | | 0.14 | | | | | | | |
| Sulfate-esterified cellulose fiber C | (1-10) | | | 0.08 | 0.12 | | | | 0.05 | 0.12 | | 0.16 | 0.05 | | | | | |
| Sulfate-esterified cellulose fiber D | (1-11) | | | | | 0.04 | | | | | | | | | | | | |
| Sulfate-esterified cellulose fiber E | (1-12) | | | | | | | | | | | | | 0.2 | | | | |
| Sulfate-esterified cellulose fiber F | (1-13) | | | | | | | | | | | | | | 0.1 | 0.1 | 0.14 | 0.08 |
| Dispersant | (1-14) | | 8 | | | | | | | 5 | | | | | 8 | | | |
| Shear thinning agent | (1-15) | 0.12 | 0.15 | 0.18 | 0.09 | 0.24 | 0.18 | 0.19 | 0.2 | 0.16 | | | | | | | | |
| Polymer coagulant | (1-16) | | | | | | | | | | | | | | 0.2 | 0.2 | | 0.4 |
| Surfactant | (1-17) | 0.5 | 0.5 | 0.5 | 0.5 | 0.5 | 0.5 | 0.5 | 0.5 | 0.5 | 0.5 | 0.5 | 0.5 | 0.5 | | | | |
| Triethanolamine | | 1 | 1 | 1 | 1 | 1 | 1 | 1 | 1 | 1 | 1 | 1 | 1 | 1 | | | | |
| Diethylene glycol | | 10 | 10 | | | | | 5 | | | 10 | | | | | | | |
| Glycerin | | 5 | 5 | 15 | 15 | 15 | 20 | 15 | 20 | 20 | 5 | 15 | 15 | 15 | 20 | 20 | 25 | 25 |
| Water | | 53.3 | 69.29 | 68.24 | 68.29 | 68.22 | 71.7 | 55.71 | 63.25 | 63.22 | 53.36 | 68.34 | 55.45 | 68.3 | 65.7 | 65.7 | 59.86 | 59.52 |
| Total | | 100 | 100 | 100 | 100 | 100 | 100 | 100 | 100 | 100 | 100 | 100 | 100 | 100 | 100 | 100 | 100 | 100 |

**[Table 2]**

| Name of materials | | Comparative Example | | | | | | | | | | | |
|---|---|---|---|---|---|---|---|---|---|---|---|---|---|
| | Note | 1-1 | 1-2 | 1-3 | 1-4 | 1-5 | 1-6 | 1-7 | 1-8 | 1-9 | 1-10 | 1-11 | 1-12 |
| Colorant A | (1-1) | 30 | | | | 20 | | | 30 | | | | |
| Colorant B | (1-2) | | 6 | | | | | | | | 6 | | |
| Colorant C | (1-3) | | | 15 | | | 14 | | | 15 | | 15 | 15 |
| Colorant D | (1-4) | | | | 6.5 | | | | | | | | |
| Colorant E | (1-5) | | | | | 2.5 | 1 | | | | | | |
| Colorant F | (1-6) | | | | | | | 10 | | | | | |
| Dispersant | (1-14) | | 8 | | | | | 5 | | | 8 | | |
| Shear thinning agent | (1-15) | 0.12 | 0.15 | 0.09 | 0.18 | 0.19 | 0.2 | 0.16 | | | | | |
| Polymer coagulant | (1-16) | | | | | | | | | | 0.2 | | 0.4 |
| Surfactant | (1-17) | 0.5 | 0.5 | 0.5 | 0.5 | 0.5 | 0.5 | 0.5 | 0.5 | 0.5 | | | |
| Triethanolamine | | 1 | 1 | 1 | 1 | 1 | 1 | 1 | 1 | 1 | | | |
| Diethylene glycol | | 10 | 10 | | | 5 | | | 10 | | | | |
| Glycerin | | 5 | 5 | 15 | 20 | 15 | 20 | 20 | 5 | 15 | 20 | 25 | 25 |
| Water | | 53.38 | 69.35 | 68.41 | 71.82 | 55.81 | 63.3 | 63.34 | 53.5 | 68.5 | 65.8 | 60 | 59.6 |
| Total | | 100 | 100 | 100 | 100 | 100 | 100 | 100 | 100 | 100 | 100 | 100 | 100 |

The contents of the materials in Table 1 and Table 2 will be described along the note number.
(1-1) Blue pigment water dispersion (Pigment Blue 15:3) (solid content: 20%, average particle size: 0.2 µm)
(1-2) Black pigment (Carbon Black) [manufactured by Mitsubishi Chemical Corporation, product name: MA-100 (average particle size: 0.024 µm)]
(1-3) Reversibly thermochromic microcapsule pigment (prepared by cooling to -20°C or lower in advance to develop blue color)
(1-4) Lamellar glitter pigment (pasty aluminum powder pigment) [manufactured by TOYO ALUMINIUM K.K., product name: ALPASTE EMERAL EMR-D5660H (solid content: 60%, average particle size: 9 µm)]
(1-5) Lamellar photoluminescent pigment (pearl pigment) [manufactured by Merck Japan Ltd., product name: Iriodin 221 (average particle size: 15 µm)]
(1-6) White pigment (titanium oxide) [manufactured by TAYCA CORPORATION, product name: JR-707 (average particle size: 0.25 µm)]
(1-7) Pink fluorescent pigment water dispersion (solid content: 45%, average particle size: 0.4 µm)
(1-8) Sulfate-esterified fine cellulose fiber having a cellulose I type crystal structure in which part of hydroxy groups of cellulose fiber are sulfate-esterified (to form sodium sulfate) (fiber width: 3 to 6 nm, the introduction amount of sulfur: 1.47 mmol/g, polymerization degree: 400 to 600, haze value in an aqueous solution having a solid content concentration of 0.5% by mass: 4.67%)
(1-9) Sulfate-esterified fine cellulose fiber having a cellulose I type crystal structure in which part of hydroxy groups of cellulose fiber are sulfate-esterified (to form sodium sulfate) (fiber width: 3 to 6nm, the introduction amount of sulfur: 1.57 mmol/g, polymerization degree: 400 to 600, haze value in an aqueous solution having a solid content concentration of 0.5% by mass: 1.71%)
(1-10) Sulfate-esterified fine cellulose fiber having a cellulose I type crystal structure in which part of hydroxy groups of cellulose fiber are sulfate-esterified (to form sodium sulfate) (fiber width: 3 to 6 nm, the introduction amount of sulfur: 1.81 mmol/g, polymerization degree: 400 to 600, haze value in an aqueous solution having a solid content concentration of 0.5% by mass: 0.99%)
(1-11) Sulfate-esterified fine cellulose fiber having a cellulose I type crystal structure in which part of hydroxy groups of cellulose fiber are sulfate-esterified (to form sodium sulfate) (average fiber width: 52 nm, the introduction amount of sulfur: 2.1 mmol/g, average fiber length: 13 µm)
(1-12) Sulfate-esterified fine cellulose fiber having a cellulose I type crystal structure in which part of hydroxy groups of cellulose fiber are sulfate-esterified (to form sodium sulfate) (average fiber width: 1 to 6 nm, the introduction amount of sulfur: 1.72 mmol/g, polymerization degree: 200 to 600, haze value in an aqueous solution having a solid content concentration of 0.5% by mass: 1.09%)
(1-13) Sulfate-esterified fine cellulose fiber having a cellulose I type crystal structure in which part of hydroxy groups of cellulose fiber are sulfate-esterified (to form sodium sulfate) (average fiber width: 1 to 6 nm, the introduction amount of sulfur: 2.00 mmol/g, polymerization degree: 50 to 600, haze value in an aqueous solution having a solid content concentration of 0.5% by mass: 1.13%)
(1-14) Product name: DISPER BYK-190 (solid content: 40%), manufactured by BYK Japan KK.
(1-15) Product name: KELZAN, manufactured by Sansho Co., Ltd.
(1-16) Product name: CELLOSIZE WP-09L, manufactured by Dow Chemical Japan Limited
(1-17) Product name: Plysurf AL, manufactured by Dai-ichi Kogyo Seiyaku Co., Ltd.

The above sulfate-esterified fine cellulose fibers (1-8) to (1-10) can be said to have a fiber width within a range of 3 to 6 nm and an average fiber width within a range of 3 to 6 nm.

The reversibly thermochromic microcapsule pigment is prepared as follows.

A reversibly thermochromic composition composed of 3 parts of 3',6'-bis [phenyl(3-methylphenyl)amino]spiro[isobenzofuran-1(3H),9'-[9H]xanthen]-3-one as the component (A), 3 parts of 1,1-bis(4-hydroxyphenyl)-2-ethylhexane and 5 parts of 2,2-bis(4-hydroxyphenyl)hexafluoropropane as the component (B), and 50 parts of 4-benzyloxyphenylethyl caprate as the (C) component was charged into a mixed solution composed of 35 parts of an aromatic isocyanate prepolymer as a wall film material and 40 parts of a co-solvent. Thereafter, the mixture was emulsified and dispersed in an aqueous 8% polyvinyl alcohol solution and stirring was continued while heating, and then 2.5 parts of a water-soluble aliphatic modified amine was added and stirring was further continued to prepare a microcapsule dispersion. A reversibly thermochromic microcapsule pigment having an average particle size of 1.9 µm was obtained from the above microcapsule dispersion by a centrifugal separation method.

The reversibly thermochromic microcapsule pigment had a complete color development temperature t₁ of -20°C and a complete decoloring temperature t₄ of 60°C, and reversibly changed color from blue to colorless due to a change in temperature.

The reversibly thermochromic microcapsule pigment in a completely colored state had a specific gravity of 1.08 to 1.09 at 20°C based on water.

### [Evaluation of Initial Writing Performance]

Using each of writing instruments fabricated in Examples 1-1 to 1-17 and Comparative Examples 1-1 to 1-12, a straight line of 15 cm was written by handwriting in a direction parallel to a lateral direction of a A4 size test sheet (vertical direction) under a room temperature (20°C) environment, and this was performed for 5 rows. Here, when using the writing instruments fabricated in Examples 1-16 to 1-17 and Comparative Examples 1-11 to 1-12, handwriting was made in a state where the wide surface of the pen body was brought into close contact with the paper surface. A writing paper A conforming to old JIS P 3201 was used as the test sheet.

The obtained handwriting was visually confirmed and handwriting was evaluated based on the following criteria. The evaluation results are as shown in Table 3 and Table 4, and Rating of "A" was considered to be acceptable.
A: Satisfactory handwriting having constant density and line width was obtained without faint parts and line skipping in the handwriting.
B: Many faint parts and/or line skipping were confirmed in the handwriting. Alternatively, it was impossible to write.

### [Evaluation of Writing Performance After Lapse of Time]

Each of the writing instruments subjected to the above writing test was left to stand in a thermostatic bath set at 50°C for 30 days with its pen tip facing downward. After the lapse of 30 days, the writing instruments were taken out from the thermostatic bath and a straight line of 15 cm was written by handwriting in a direction parallel to a lateral direction of a A4 size test sheet (vertical direction) under a room temperature (20°C) environment, and this was performed for 5 rows. Here, when using the writing instruments fabricated in Examples 1-16 to 1-17 and Comparative Examples 1-11 to 1-12, handwriting was made in a state where the wide surface of the pen body was brought into close contact with the paper surface. A writing paper A conforming to old JIS P 3201 was used as the test sheet.

The obtained handwriting was visually confirmed and handwriting was evaluated based on the following criteria. The evaluation results are as shown in Table 3 and Table 4, and Ratings of "A" and "B" were considered to be acceptable.
A: The color of the handwriting was the same as or at the same level as the initial handwriting without faint parts and line skipping of the handwriting, and satisfactory handwriting was obtained.
B: Faint parts and/or line skipping are somewhat confirmed in the handwriting, and the color of the handwriting was slightly deeper than the initial handwriting, but there was no practical problem.
C: The writing was possible, but the color of the handwriting was deeper than the initial handwriting, and a difference in color of the handwriting occurred.
D: Many faint parts and/or line skipping were confirmed in the handwriting. Alternatively, it was impossible to write.

**[Table 3]**

| | | Example | | | | | | | | | | | | | | | | |
|---|---|---|---|---|---|---|---|---|---|---|---|---|---|---|---|---|---|---|
| | | 1-1 | 1-2 | 1-3 | 1-4 | 1-5 | 1-6 | 1-7 | 1-8 | 1-9 | 1-10 | 1-11 | 1-12 | 1-13 | 1-14 | 1-15 | 1-16 | 1-17 |
| Evaluation | Initial writing performance | A | A | A | A | A | A | A | A | A | A | A | A | A | A | A | A | A |
| | Writing performance after lapse of time | A | A | A | A | A | A | A | A | A | A | A | A | A | A | A | A | A |

**[Table 4]**

| | | Comparative Example | | | | | | | | | | | |
|---|---|---|---|---|---|---|---|---|---|---|---|---|---|
| | | 1-1 | 1-2 | 1-3 | 1-4 | 1-5 | 1-6 | 1-7 | 1-8 | 1-9 | 1-10 | 1-11 | 1-12 |
| Evaluation | Initial writing performance | A | A | A | A | A | A | A | A | B | A | A | A |
| | Writing performance after lapse of time | C | C | D | D | D | D | D | C | D | C | D | C |

### [Example 2]

The following Example 2 shows that, regarding the ink composition according to the embodiments of the present invention and the writing instrument containing the same, dripping does not occur during long-term storage of the writing instrument with its pen tip facing downward, and satisfactory handwriting without faint parts can be formed.

The composition of the ink composition of Examples are shown in Table 5 below, and the composition of the ink composition of Comparative Examples are shown in Table 6 below. The numerical value of the composition in the table indicates parts by mass.

**[Table 5]**

| Name of materials | | Example | | | | | | | | | | | | |
|---|---|---|---|---|---|---|---|---|---|---|---|---|---|---|
| | Note | 2-1 | 2-2 | 2-3 | 2-4 | 2-5 | 2-6 | 2-7 | 2-8 | 2-9 | 2-10 | 2-11 | 2-12 | 2-13 |
| Colorant H | (2-1) | 6 | | | | | | | 5 | 5 | | | | |
| Colorant I | (2-2) | | 6 | | | | 7 | 6 | | | 6 | | | 6 |
| Colorant J | (2-3) | | | 6 | | | | | | | | | | |
| Colorant K | (2-4) | | | | 6 | | | | | | | 6 | | |
| Colorant L | (2-5) | | | | | 15 | | | | | | | 14 | |
| Dispersant | (2-6) | | | | 8 | | | | | | | 8 | | |
| Diethylene glycol | | 9 | 9 | 9 | 10 | | 9 | 9 | 9 | 9 | 9 | | | 9 |
| Glycerin | | | | | 5 | 15 | | | | | | 20 | 20 | |
| Phosphate ester | (2-7) | 0.5 | 0.5 | 0.5 | 0.5 | 0.5 | 0.5 | 0.5 | 0.5 | 0.5 | 0.5 | | | 0.5 |
| Triethanolamine | | 1 | 1 | 1 | 1 | 1 | 1 | 1 | 1 | 1 | 1 | | | 1 |
| Sulfate-esterified cellulose fiber A | (2-8) | 0.12 | | | | 0.14 | | 0.22 | | | | | | |
| Sulfate-esterified cellulose fiber B | (2-9) | | 0.13 | | 0.15 | | | | | | | | | |
| Sulfate-esterified cellulose fiber C | (2-10) | | | 0.15 | | | 0.02 | | 0.45 | | 0.08 | | | |
| Sulfate-esterified cellulose fiber D | (2-11) | | | | | | | | | 0.18 | | | | |
| Sulfate-esterified cellulose fiber E | (2-12) | | | | | | | | | | | 0.1 | 0.1 | 0.06 |
| Shear thinning agent | (2-13) | | | | | | | | | | 0.13 | | | |
| Polymer coagulant | (2-14) | | | | | | | | | | | 0.2 | 0.2 | |
| Ion-exchanged water | | 83.38 | 83.37 | 83.35 | 69.35 | 68.36 | 82.48 | 83.28 | 84.05 | 84.32 | 83.29 | 65.7 | 65.7 | 83.44 |
| Total | | 100 | 100 | 100 | 100 | 100 | 100 | 100 | 100 | 100 | 100 | 100 | 100 | 100 |

**[Table 6]**

| Name of materials | | Comparative Example | | | | | | | | | |
|---|---|---|---|---|---|---|---|---|---|---|---|
| | Note | 2-1 | 2-2 | 2-3 | 2-4 | 2-5 | 2-6 | 2-7 | 2-8 | 2-9 | 2-10 |
| Colorant H | (2-1) | | | | 6 | | | | | | |
| Colorant I | (2-2) | 6 | 6 | 6 | | 6 | 6 | 6 | | | 6 |
| Colorant J | (2-3) | | | | | | | | 6 | | |
| Colorant K | (2-4) | | | | | | | | | 6 | |
| Colorant L | (2-5) | | | | | | | | | | |
| Dispersant | (2-6) | | | | | | | | | 8 | |
| Diethylene glycol | | 9 | 9 | 9 | 9 | 9 | 9 | 9 | 9 | | 9 |
| Glycerin | | | | | | | | | | 20 | |
| Phosphate ester | (2-7) | 0.5 | 0.5 | 0.5 | 0.5 | 0.5 | 0.5 | 0.5 | 0.5 | | 0.5 |
| Triethanolamine | | 1 | 1 | 1 | 1 | 1 | 1 | 1 | 1 | | 1 |
| Crystalline cellulose | (2-15) | | | | | 12 | 12 | 12 | 12 | | |
| Resin particles A | (2-16) | | | | | | 0.5 | | | | |
| Resin particles B | (2-17) | | | | | | | 1 | 1 | | |
| Polyvinylpyrrolidone | (2-18) | | | 2 | 2 | | | | | | |
| Shear thinning agent | (2-13) | | 0.13 | 0.38 | 0.38 | | | | | | |
| Polymer coagulant | (2-14) | | | | | | | | | 0.2 | |
| Ion-exchanged water | | 83.5 | 83.37 | 81.12 | 81.12 | 71.5 | 71 | 70.5 | 70.5 | 65.8 | 83.5 |
| Total | | 100 | 100 | 100 | 100 | 100 | 100 | 100 | 100 | 100 | 100 |

The content of the raw material in the table will be described along the note number.
(2-1) Red dye (Acid Red 289)
(2-2) Blue dye (Acid Blue 90)
(2-3) Yellow dye (Acid Yellow 9)
(2-4) Black pigment (Carbon Black) [manufactured by Mitsubishi Chemical Corporation, product name: MA-100 (average particle size: 0.024 µm)]
(2-5) Thermochromic blue pigment, specifically, a microcapsule pigment including a reversibly thermochromic composition composed of 2.0 parts of 3-(4-diethylamino-2-hexyloxyphenyl)-3-(1-ethyl-2-methylindol-3-yl)-4-azaphthalide as the component (A), 8.0 parts of 2,2-bis(4'-hydroxyphenyl)hexafluoropropane as the component (B), and 50.0 parts of 4-benzyloxyphenylethyl caprate as the component (C) (T₁: -14°C, T₂: -6°C, T₃: 48°C, T₄: 60°C, ΔH: 64°C, average particle size: 2.3 µm, changing color from blue to colorless)
(2-6) Product name: DISPER BYK-190 (solid content: 40%), manufactured by BYK Japan KK.
(2-7) Product name: Plysurf AL, manufactured by Dai-ichi Kogyo Seiyaku Co., Ltd.
(2-8) Sulfate-esterified fine cellulose fiber having a cellulose I type crystal structure in which part of hydroxy groups of cellulose fiber are sulfate-esterified (to form sodium sulfate) (fiber width:3 to 6 nm, the introduction amount of sulfur: 1.47 mmol/g, polymerization degree: 400 to 600, haze value in an aqueous solution having a solid content concentration of 0.5% by mass: 4.67%)
(2-9) Sulfate-esterified fine cellulose fiber having a cellulose I type crystal structure in which part of hydroxy groups of cellulose fiber are sulfate-esterified (to form sodium sulfate) (fiber width: 3 to 6 nm, the introduction amount of sulfur: 1.57 mmol/g, polymerization degree: 400 to 600, haze value in an aqueous solution having a solid content concentration of 0.5% by mass:1 .71%)
(2-10) Sulfate-esterified fine cellulose fiber having a cellulose I type crystal structure in which part of hydroxy groups of cellulose fiber are sulfate-esterified (to form sodium sulfate) (fiber width: 3 to 6 nm, the introduction amount of sulfur: 1.81 mmol/g, polymerization degree: 400 to 600, haze value in an aqueous solution having a solid content concentration of 0.5% by mass: 0.99%)
(2-11) Sulfate-esterified fine cellulose fiber having a cellulose I type crystal structure in which part of hydroxy groups of cellulose fiber are sulfate-esterified (to form sodium sulfate) (average fiber width: 52 nm, the introduction amount of sulfur: 2.1 mmol/g, average fiber length: 13 µm)
(2-12) Sulfate-esterified fine cellulose fiber having a cellulose I type crystal structure in which part of hydroxy groups of cellulose fiber are sulfate-esterified (to form sodium sulfate) (average fiber width: 1 to 6 nm, the introduction amount of sulfur: 2.00 mmol/g, polymerization degree: 50 to 600, haze value in an aqueous solution having a solid content concentration of 0.5% by mass: 1.13%)
(2-13) Product name: KELZAN, manufactured by Sansho Co., Ltd.,
(2-14) Product name: CELLOSIZE WP-09L, manufactured by Dow Chemical Japan Limited
(2-15) Product name: CEOLUS RC-N30 (active ingredient: 1.5%), manufactured by Asahi Chemical Industry Co., Ltd.
(2-16) Product name: CHEMIPEARL W900 (active ingredient: 40%), manufactured by Mitsui Chemicals, Inc.
(2-17) Product name: CHEMIPEARL W401 (active ingredient: 40%), manufactured by Mitsui Chemicals, Inc.
(2-18) Product name: Sokalan K90, manufactured by BASF Corporation

The above sulfate-esterified fine cellulose fibers (2-8) to (2-10) can be said to have a fiber width within a range of 3 to 6 nm and an average fiber width within a range of 3 to 6 nm.

### Preparation of ink (Examples 2-1 to 2-13 and Comparative Examples 2-1 to 2-10)

Ballpoint pen ink compositions were obtained by mixing the respective raw materials excluding a shear thinning agent according to each formulation of the Examples and Comparative Examples, followed by stirring at 20°C for 1,000 rpm for 1 hour with a disper and further stirring for additional 1 hour for those including the shear thinning agent. The shear thinning agent was used in a state of a pre-vehicle dispersed in water in advance.

### Fabrication of Writing Instrument (Examples 2-1 to 2-10 and Comparative Examples 2-1 to 2-8)

The ballpoint pen refill comprises a conical cutting ballpoint pen tip (containing a ball push spring for elastically emitting a ball forward) that rotatably holds a ball at a tip; a connection member having the ballpoint pen tip fixed to a front part; an ink containing tube in which the connection member is fixed to the tip opening, and an ink and an ink backflow inhibitor are contained; and a tail plug fitted to a rear end opening of the ink containing tube. The ink backflow inhibitor is an ink backflow inhibitor obtained by kneading polybutene as a base oil and a fatty acid amide as a thickener.

A ball having a diameter of 0.5 mm was used for the ballpoint pen refill.

The sample ballpoint pen was obtained by containing each ball pen refill in a rearward biasing state by a spring (coil spring) inside an axial barrel equipped with a clip on the rear outer surface. The ballpoint pen has a retractable form in which the ballpoint pen tip protrudes to the outside from the tip hole of the axial barrel by the knock operation of the rear end (knock operation portion) of the axial barrel forward.

### Fabrication of Writing Instrument (Examples 2-1 1 to 2-13 and Comparative Examples 2-9 to 2-10)

The above ink composition was impregnated into an ink occlusion body made of polyester sliver covered with a synthetic resin film and, after containing in an axial barrel made of a polypropylene resin, a resin-processed pen body (cannonball type) comprising an extrusion molded product of a polyacetal resin having a plurality of ink lead-out holes extending in the axial direction was assembled at a tip part of the axial barrel in a connected state through a resin holder and a cap was attached to fabricate a marking pen (cap-type marking pen).

The following tests were performed by each of sample ballpoint pens and marking pens.

### Dripping Test

Using each writing instrument, a tip was exposed from the axial barrel and held downward and, after standing for 20 hours in an atmosphere at a temperature of 20°C and a relative humidity of 95% or a temperature of 30°C and a relative humidity of 80%, the appearance of the appearance of the tip of the writing test was visually observed.

### Writing Test

Using each writing instrument that was confirmed to be writable, a tip was exposed from the axial barrel in an atmosphere at a temperature of 20°C and a relative humidity of 60% and, after standing in a lateral direction for 24 hours, a straight line is written on JIS P 3201 writing paper A by handwriting, and the state of handwriting was visually observed.

The test results are shown in Table 7 below.

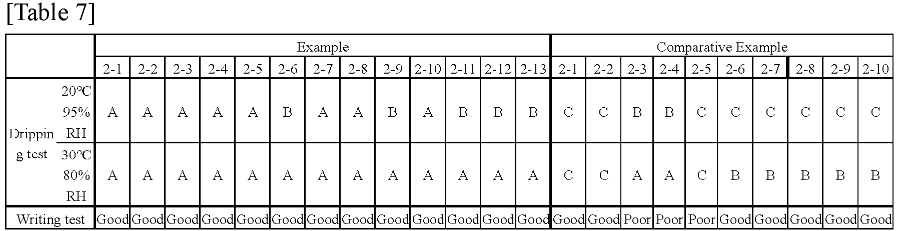

The contents of the evaluation symbol of the test result are as follows.
Dripping test (ratings "A" and "B" were considered to be acceptable)
   A: No dripping of ink is recognized.
   B: Ink oozes out at the tip of the tip.
   C: Ink droplets are recognized at the tip end.
Writing test (rating "Good" was considered to be acceptable)
   Good: Handwriting with constant density and line width can be stably obtained.
   Poor: Faint parts occur in the handwriting.

This application claims priority based on Japanese Patent Application No. 2022-133582 and Japanese Patent Application No. 2022-133588, both of which were filed on August 24, 2022, the disclosures of which are incorporated by reference herein.

## Claims

1. A writing instrument aqueous ink composition comprising water, a colorant, and a sulfate-esterified cellulose fiber in which at least part of hydroxy groups of the cellulose fiber are sulfate-esterified.

2. The writing instrument aqueous ink composition according to claim 1, wherein the sulfate-esterified cellulose fiber has a cellulose I type crystal structure, and at least part of hydrogen atoms of hydroxy groups of the cellulose fiber is substituted with a sulfo group represented by the following formula (1):
(-SO₃ ⁻ )ᵣ ·Z^{r +} (1)
where r is a natural number of 1 to 3, and Z^{r +} is at least one selected from the group consisting of a hydrogen ion, a cation of an alkali metal, an ammonium ion, an aliphatic ammonium ion and an aromatic ammonium ion when r = 1, and at least one selected from the group consisting of a cation of an alkaline earth metal or a cation of a polyvalent metal when r = 2 or 3.

3. The writing instrument aqueous ink composition according to claim 1 or 2, wherein the sulfate-esterified cellulose fiber has an average fiber width of 0.5 to 500 nm.

4. The writing instrument aqueous ink composition according to claim 3, wherein the sulfate-esterified cellulose fiber has an average fiber width of 30 nm or less.

5. The writing instrument aqueous ink composition according to any one of claims 1 to 4, wherein an introduction amount of sulfur of the sulfate-esterified cellulose fiber is more than 0.42 mmol/g.

6. The writing instrument aqueous ink composition according to any one of claims 1 to 5, wherein the polymerization degree of the sulfate-esterified cellulose fiber is 30 or more.

7. The writing instrument aqueous ink composition according to any one of claims 1 to 6, wherein the haze value of a dispersion in which the sulfate-esterified cellulose fiber is dispersed in a water-soluble solvent such that the solid content concentration is 0.5% by mass is 20% or less.

8. The writing instrument aqueous ink composition according to any one of claims 1 to 7, wherein the sulfate-esterified cellulose fiber is mixed in an amount of 0.01 to 3% by mass in the total amount of the ink composition.

9. The writing instrument aqueous ink composition according to any one of claims 1 to 8, further comprising a shear thinning agent.

10. The writing instrument aqueous ink composition according to claim 9, wherein the shear thinning agent is one or more selected from the group consisting of water-soluble polysaccharides, polymers containing an alkyl ester of methacrylic acid as a main component and having a molecular weight of 100,000 to 150,000, poly-N-vinyl carboxylic acid amide crosslinked products, benzylidene sorbitol and derivatives thereof, benzylidene xylitol and derivatives thereof, alkali thickened acrylic resins, crosslinkable acrylic acid polymers, inorganic fine particles, nonionic surfactants having an HLB value of 8 to 12, and metal salts or amine salts of dialkylsulfosuccinic acid.

11. The writing instrument aqueous ink composition according to claim 9 or 10, wherein the shear thinning agent is mixed in an amount of 0.05 to 1% by mass in the total amount of the ink composition.

12. The writing instrument aqueous ink composition according to any one of claims 1 to 11, wherein the colorant is dispersed in the water.

13. The writing instrument aqueous ink composition according to any one of claims 1 to 12, wherein the colorant includes one or more selected from the group consisting of pigments and resin particles.

14. The writing instrument aqueous ink composition according to any one of claims 1 to 13, wherein the colorant has an average particle size of 0.01 to 25 µm.

15. The writing instrument aqueous ink composition according to any one of claims 1 to 14, comprising a colorant having a specific gravity of more than 1.

16. A writing instrument containing the writing instrument aqueous ink composition according to any one of claims 1 to 15.
